(19) Europäisches Patentamt
European Patent Office
Office européen des brevets

(11) **EP 4 347 702 B1**

(12) **EUROPÄISCHE PATENTSCHRIFT**

(45) Veröffentlichungstag und Bekanntmachung des Hinweises auf die Patenterteilung:
**08.01.2025 Patentblatt 2025/02**

(21) Anmeldenummer: **21733064.6**

(22) Anmeldetag: **01.06.2021**

(51) Internationale Patentklassifikation (IPC):
*C08K 5/29* $^{(2006.01)}$

(52) Gemeinsame Patentklassifikation (CPC):
(C-Sets verfügbar)
**C08L 83/04; C08K 5/29;** C08G 77/045     (Forts.)

(86) Internationale Anmeldenummer:
**PCT/EP2021/064670**

(87) Internationale Veröffentlichungsnummer:
**WO 2022/253413 (08.12.2022 Gazette 2022/49)**

(54) **VERNETZBARE ORGANOSILOXAN-MODIFIZIERTE REAKTIONSHARZE**

CROSS-LINKABLE ORGANOSILOXANE-MODIFIED REACTION RESINS

RÉSINES DE RÉACTION À MODIFICATION ORGANOSILOXANE RÉTICULABLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.04.2024 Patentblatt 2024/15**

(73) Patentinhaber: **Wacker Chemie AG**
**81671 München (DE)**

(72) Erfinder: **OSTENDORF, Detlev**
**01129 Dresden (DE)**

(74) Vertreter: **Mieskes, Klaus Theoderich et al**
**Wacker Chemie AG**
**Gisela-Stein-Straße 1**
**81671 München (DE)**

(56) Entgegenhaltungen:
**CN-A- 112 111 059**

(52) Gemeinsame Patentklassifikation (CPC): (Forts.)

C-Sets
**C08K 5/29, C08L 83/04**

## Beschreibung

Die Erfindung betrifft vernetzbare, mit Organosiloxanen modifizierte, Reaktionsharze mit funktionellen Cyanatester-Gruppen, Verfahren zu deren Herstellung, sowie daraus erhältliche Vulkanisate und Komposite.

Epoxid (EP)-Harze bzw. Epoxidharzsysteme kommen in vielfältigen Anwendungen zum Einsatz und haben sich heutzutage in Verbundwerkstoffen, zum Beispiel in Verbindung mit Glas-, Kohlenstoff- oder Aramidfaser, als eine der am meisten verwendeten Duromerklassen etabliert. Daneben hat der Einsatz von weiteren organischen Harzsystemen, wie Cyanatester (CE)-, Bismaleimid (BMI)-, Polyimid (PI)-, Benzoxazin- oder Phtalonitril-Harzen, bzw. Misch-Harzsystemen, wie Bis(benzocyclobutenimid)/Bismaleimid, Cyanatester/Epoxid oder Bismaleimid/Triazin (BT-Harze), als Matrixharze in Faserverbundwerkstoffen, z.B. in Carbonfaser-verstärkten Kunststoffen (CFK), für den Einsatz in Industrie, Automobilbau sowie Luft- und Raumfahrt in den vergangenen Jahren zunehmende Bedeutung erlangt. Im Vergleich zu Epoxidharzen kombinieren beispielsweise die auf CE-, BMI- oder PI-basierten polymeren Matrixharze sehr gute mechanische Eigenschaften mit hohen Glasübergangstemperaturen, hohen thermischen Belastbarkeiten sowie Langzeitbeständigkeiten, was die Einsatzmöglichkeiten dieser Duromere besonders im Hochtemperaturbereich stark erweitert. Hochtemperatur-Duromersysteme auf Basis von CE-Harzen haben jedoch auch Nachteile. Bei der thermischen Aushärtung trimerisieren die reaktiven Cyanatester-Gruppen (= "N=C-O-") zu cyclischen Triazinringen, wodurch Netzwerke mit hoher Vernetzungsdichte entstehen, welche einerseits hohe mechanische Stabilitäten, andererseits aber auch eine erhöhte Sprödigkeit aufweisen. Ein weiterer wesentlicher Nachteil von CE-Harzsystemen ist der, dass das Triazin-Duromernetzwerk eine vergleichsweise hohe Wasseraufnahmerate aufweist und durch Feuchtigkeit schnell abgebaut wird (hydrolytische Degradation) was zu einem Verlust der mechanischen Eigenschaften führt. Es wäre somit wünschenswert für diese bereits marktgängigen Harzsysteme geeignete Modifikatoren zur Reduzierung der Wasseraufnahme bereitzustellen, sodass die daraus erhältlichen Hochtemperatur-Duromere in anspruchsvollen Verbundwerkstoff-Anwendungen, vorzugsweise für die Luft- und Raumfahrtindustrie, kommerziell eingesetzt werden können.

Der Einsatz von Siloxan-haltigen Komponenten zur Schlagzähmodifizierung und zur Verbesserung der thermischen sowie dielektrischen Eigenschaften von Cyanatester-Duromer-Netzwerken wurde bereits mehrfach in der Literatur beschrieben, jedoch ist über den Einfluss von Siloxanen auf die Wasseraufnahme bislang nur wenig bekannt.

In Polym. Adv. Technol. 2020, 31, 1245-1255 zeigen die Autoren, dass lineare Methyl- und Phenyl-Gruppen-haltige Siloxane mit reaktiven, mit Cyanatester-Gruppen co-polymerisierbare, $\equiv$Si-OH-oder $\equiv$Si-H-Gruppen die Wasseraufnahme von einem vulkanisierten Cyanatesterharz, 2,2'-Bis(4-cyanatophenyl)propan, verringern. Zur Anwendung kommen dabei ein kurzkettiges Methyl- und Phenylgruppen-haltiges Trisiloxan mit reaktiven $\equiv$Si-H-Gruppen (bezeichnet als "Si-H") sowie ein höhermolekulares Poly(methylphenylsiloxan) mit reaktiven $\equiv$Si-OH-Gruppen (bezeichnet als "Si-B"). Im Vergleich zu nicht modifiziertem Cyanatesterharz wird die Wasseraufnahme durch "Si-H" nur geringfügig und mittels "Si-B" signifikant verringert.

Das Autoren-Kollektiv beansprucht in der Patentschrift CN 112111059 auch lineare, mit Methyl- und/oder Phenylgruppen substituierte Siloxane ohne reaktive Gruppen als Modifikatoren für Cyanatester-Harze, jedoch werden hierfür keine entsprechenden Ausführungsbeispiele beschrieben sondern es wird - wie in der zuvor genannten Schrift - ausschließlich der Einfluss von linearen Siloxanen mit endständigen reaktiven, Silicium-gebundenen OH-, H- oder (Glycidyloxypropyl)-Gruppen gezeigt; wobei der Polymerisationsgrad der in den Ausführungsbeispielen 1 bis 4 verwendeten Siloxane, dargestellt in Formel 2 und Formel 5 in CN 112111059, nicht offenbart ist, so dass diese nicht nachgearbeitet werden können.

Die Verwendung von linearen Siloxanen mit reaktiven $\equiv$Si-OH-oder $\equiv$Si-H-Gruppen als Modifikatoren für Cyanatesterharze hat jedoch mehrere Nachteile: Zum einen können die Silanol ($\equiv$Si-OH)-Gruppen Wasser abspalten, etwa nach der in der o.g. Literatur auf Seite 1251, Figur 8 (D) beschriebenen Reaktionsgleichung, das in unerwünschter Weise mit den Hydrolyse-empfindlichen Cyanatester-Gruppen unter Freisetzung von Amin und gasförmigem Kohlenstoffdioxid reagiert und dadurch Blasenbildung während der Vernetzungsreaktion verursacht was zu Porosität im vernetzten Material führt. Zum anderen können die reaktiven Si-OH- oder Si-H-Gruppen entsprechend den in der o.g. Literatur auf Seite 1251, Figur 8 (C) und (E) beschriebenen Reaktionsgleichungen mit den Cyanatester-Gruppen copolymerisieren und dadurch die Netzwerktopologie verändern was sich nachteilig auf Eigenschaften wie die Risszähigkeit des ausgehärteten Duromer-Netzwerkes auswirken kann. Weiterhin sind höhermolekulare Polysiloxane mit ausgehärteten Cyanatester-Duromer-Netzwerken wenig kompatibel, sodass nach der Aushärtung des Cyanatester-Harzes makroskopisch, d.h. augenscheinlich, heterogene, trübe bis undurchsichtige (opake) Vulkanisate entstehen, aus denen das Silicon ausschwitzt, was jedoch nicht erwünscht ist und sich zudem nachteilig auf die Wasseraufnahme auswirkt. CN112111059A offenbart lineare, mit Methyl- und/ oder Phenylgruppen substituierte Siloxane als Modifikatoren für Cyanatester-Harze.

Der vorliegenden Erfindung liegt die Aufgabe zugrunde, organische Harze mit reaktiven Cyanatester-Gruppen so zu modifizieren, dass nach dem Formgebungs- und Härtungsprozess Duroplaste mit verringerter Wasseraufnahmerate und damit verbesserter Hydrolysebeständigkeit sowie gegebenenfalls verbesserter Risszähigkeit und gegebenenfalls verbesserten dielektrischen Eigenschaften erhalten werden, wobei die den Duroplasten eigenen vorteilhaften Eigenschaften, wie Wärmeformbeständigkeit, mechanische Festigkeit, thermo-oxidative Beständigkeit und Chemikalienbeständigkeit, auch bei den derart modifizierten Duroplasten weitgehend erhalten bleiben.

Diese Aufgabe wird erfindungsgemäß dadurch gelöst, dass lineare, mit Methyl- und Phenylgruppen substituierte Tri-, Tetra- oder Pentasiloxane ohne reaktive Gruppen, wie $\equiv$Si-OH oder $\equiv$Si-H, verwendet werden, bevorzugt solcher Tri- oder Tetrasiloxane, welche mit organischen Cyanatester-Harzen sehr gut mischbar sind und nach der Vulkanisation mit der vernetzten Cyanatester-Matrix (d.h. dem Triazin-Netzwerk) homogen-einphasige, transparente Duromere ergeben, welche keine Entmischung, d.h. Ausölen oder Ausschwitzen der Siloxankomponente aus dem Vulkanisat, aufweisen. Im Vergleich zu nicht modifizierten Cyanatesterharzen zeichnen sich die mit den erfindungsgemäßen Tri-, Tetra- oder Pentasiloxanen modifizierten Cyanatesterharze nach der Aushärtung zum Duromer durch eine deutlich verringerte Wasseraufnahme und damit eine höhere Beständigkeit gegen hydrolytische Zersetzung aus. Überraschenderweise wurde dabei gefunden, dass die erfindungsgemäßen Siloxan-Modifikatoren die Wasseraufnahme von vulkanisierten Cyanatester-Netzwerken signifikant stärker herabsetzen als die nach dem Stand-der-Technik bekannten Siloxane mit reaktiven Gruppen, wie $\equiv$Si-H oder $\equiv$Si-OH, oder höhermolekularen Polysiloxane.

Gegenstand der Erfindung sind vernetzbare Zusammensetzungen enthaltend

(A) mindestens eine organische, von Siloxaneinheiten (= "$\equiv$Si-O-Si$\equiv$") freie, Verbindung mit mindestens zwei reaktiven Cyanatester-Gruppen (= "N$\equiv$C-O-"),

(B) mindestens ein lineares Organosiloxan der allgemeinen Formel

$$R_a R^1_b SiO_{(4-a-b)/2} \qquad (I),$$

wobei

R gleich oder verschieden sein kann und einwertige, SiC-gebundene, gesättigte aliphatische Kohlenwasserstoffreste bedeutet,

$R^1$ gleich oder verschieden sein kann und einwertige, SiC-gebundene, gegebenenfalls mit Halogen- oder Phosphoratom substituierte, aromatische Kohlenwasserstoffreste bedeutet,

a 0, 1, 2 oder 3, bevorzugt 0, 1 oder 2, besonders bevorzugt 0 oder 1, insbesondere 1 ist,

b 0, 1, 2 oder 3, bevorzugt 0, 1 oder 2, besonders bevorzugt 1 oder 2, ist,

mit der Maßgabe, dass

das Organosiloxan (B) aus drei bis fünf Einheiten der Formel (I), bevorzugt aus drei oder vier Einheiten der Formel (I), besonders bevorzugt aus drei Einheiten der Formel (I), besteht; in Formel (I) die Summe a+b gleich 2 oder 3 ist, pro Organosiloxan-Molekül (B) in zwei Einheiten der Formel (I) die Summe a+b gleich 3 ist und pro Organosiloxan-Molekül (B) mindestens drei Reste $R^1$ vorhanden sind.

In der vorliegenden Erfindungsmeldung steht die Bezeichnung "1-Propenyl" für den Rest "-CH=CH-CH$_3$", "2-Propenyl" (= Allyl) für den Rest "-CH$_2$-CH=CH$_2$" und die Bezeichnung "Propenyl" für den 1-oder 2-Propenyl-Rest.

Um die Seitenzahl der Beschreibung der vorliegenden Erfindung nicht zu umfangreich zu gestalten, werden nur die bevorzugten Ausführungsformen zu den einzelnen Merkmalen aufgeführt.

Der fachkundige Leser soll diese Art der Offenbarung aber explizit so verstehen, dass damit auch jede Kombination aus unterschiedlichen Bevorzugungsstufen explizit offenbart und explizit gewünscht ist - also jede Kombination sowohl innerhalb einer/eines einzigen Verbindung/Merkmals als auch zwischen unterschiedlichen Verbindungen/Merkmalen.

## Cyanatesterharz (A)

Es handelt sich um eine organische, von Siloxaneinheiten (= "$\equiv$Si-O-Si$\equiv$") freie Verbindung mit mindestens zwei reaktiven Cyanatester-Gruppen (= "N$\equiv$C-O-") pro Molekül. Verbindung (A) kann substituiert sein sowie auch Heteroatome enthalten. Bevorzugt handelt es sich bei Verbindung (A) um, gegebenenfalls substituierte, gegebenenfalls Heteroatome enthaltende, aromatische Kohlenwasserstoffverbindungen, wobei pro Molekül mindestens zwei an aromatische Kohlenstoffatome gebundene Cyanatester-Gruppen vorliegen. Besonders bevorzugt sind in Verbindung (A) pro Molekül mindestens zwei, gegebenenfalls substituierte, gegebenenfalls Heteroatome enthaltende, aromatische Kohlenwasserstoffreste mit jeweils einer an ein aromatisches Kohlenstoffatom gebundenen Cyanatester-Gruppe vorhanden, insbesondere sind in Verbindung (A) die, gegebenenfalls substituierten, gegebenenfalls Heteroatome enthaltenden, aromatischen Kohlenwasserstoffreste mit jeweils einer an ein aromatisches Kohlenstoffatom gebundenen Cyanatester-Gruppe unabhängig voneinander über eine kovalente Bindung oder mindestens eine verbrückende Einheit ausgewählt aus der Gruppe bestehend aus -CR$^2_2$-, -CR$^2$=CR$^2$-, =C=CR$^2_2$, -O-, -S-, -N=N-, -CH=N-, -C(=O)-, -C(=O)O-, -OC(=O)O-, -SO-,

-SO$_2$-, O=P(O-)$_3$, einen zweiwertigen aromatischen Kohlenwasserstoffrest, wie Phenylen, Toluylen, Biphenylen und Naphthylen; oder einem zweiwertigen Cycloalkandiyl-Rest, wie Tricyclo[5.2.1.0$^{2,6}$]decandiyl und Bicyclo[2.2.1]heptandiyl, miteinander verbunden.

Bei Rest R$^2$ handelt es sich jeweils unabhängig voneinander um Wasserstoffatom, Halogenatom oder einen, gegebenenfalls substituierten, Kohlenwasserstoffrest mit 1 bis 30 Kohlenstoffatomen, welcher gegebenenfalls entweder mit einem Substituenten oder mit dem anderen Rest R$^2$ zu einer cyclischen Einheit verbunden sein kann.

Beispiele für gegebenenfalls substituierte Kohlenwasserstoffreste R$^2$ sind Methyl-, Ethyl-, Trifluormethyl-, Fluorenyl-, 1,1-Cyclohexandiyl-, 9H-Fluoren-9,9-diyl-, N-Phenylphtalimid-3,3-diyl-, 1(3H)-Isobenzofuranon-3,3-diyl-, Anthracen-9(10H)-on-10,10-diyl, Phenyl- und der 3,3,5-Trimethylcyclohexan-1,1-diylrest.

Beispiele für die erfindungsgemäß eingesetzte Komponente (A) sind Di- und Poly-Cyanatester von monoaromatischen Kohlenwasserstoffen, wie Phenylen-1,2-dicyanat, Phenylen-1,3-dicyanat (CAS 1129-88-0), Phenylen-1,4-dicyanat (CAS 1129-80-2), 2,4,5-Trifluorphenylen-1,3-dicyanat, 1,3,5-Tricyanatobenzol, Methyl(2,4-dicyanatophenyl)keton und 2,7-Dicyanatonaphtalen; Cyanatester von Bisphenolen, wie 2,2-Bis(4-cyanatophenyl)butan, 2,2-Bis(4-cyanatophenyl)propan (CAS 1156-51-0, Bisphenol A-Cyanatester; Handelsbezeichnungen: AroCy® B10, PRIMASET® BADCy bzw. CYTESTER® TA), 2,2-Bis(4-cyanatophenyl)-1,1,1,3,3,3-hexafluoropropan (CAS 32728-27-1, Bisphenol AF-Cyanatester), 2,2-Bis(3-methyl-4-cyanatophenyl)propan (Bisphenol C-Cyanatester), 1,1-Bis(4-cyanatophenyl)ethan (CAS 47073-92-7, Bisphenol E-Cyanatester; Handelsbezeichnungen: AroCy® L-10, PRIMASET® LECy, CYTESTER® P201), 1,1-Bis(4-cyanatophenyl)-1-phenylethan (Bisphenol AP-Cyanatester), Bis(4-cyanatophenyl)methan (Bisphenol F-Cyanatester), Bis(4-cyanato-3,5-dimethylphenyl)methan (CAS 101657-77-6, Tetramethyl-Bisphenol F-Cyanatester), 1,3-Bis(2-(4-cyanatophenyl)propan-2-yl)benzol (CAS 127667-44-1, Bisphenol M-Cyanatester), Bis(4-cyanatophenyl)thioether), Bis(4-cyanatophenyl)ether, 9,9-Bis(4-cyanatophenyl)fluoren (Bisphenol FL-Cyanatester), Bis(4-cyanatophenyl)sulfon (Bisphenol S-Cyanatester), Bis(4-cyanatophenyl)keton, Bis(4-(4-cyanatophenoxy)phenyl)keton, Bis(4-(4-cyanatophenoxy)phenyl)sulfon, Bis(4-(4-cyanatophenoxy)phenyl)(phenyl)phosphinoxid, Bis(4-cyanatophenyl)(methyl)phosphinoxid, 1,1-Dibromo-2,2-bis(4-cyanatophenyl)ethylen, 1,1-Dichloro-2,2-bis(4-cyanatophenyl)ethylen (CAS 14868-03-2), 3,3-Bis(4-cyanatophenyl)-N-phenylphtalimid, 3,3-Bis(4-cyanatophenyl)-1(3H)-isobenzofuranon, 3,3-Bis(4-cyanatophenyl)-2-benzofuran-1-on, 10,10-bis(4-cyanatophenyl)anthracen-9(10H)-on, 1-Ethyl-2-methyl-3-(4-cyanatophenyl)-5-cyanatoindan, 1,1-Dimethyl-3-methyl-3-(4-cyanatophenyl)cyanatoindan, Bis(2-cyanato-3-methoxy-5-methylphenyl)methan und 1,1-Bis(3-methyl-4-cyanatophenyl)cyclohexan (Bisphenol Z-Cyanatester); Cyanatester von Propenyl-substituierten Bisphenolen, wie Bis(4-(4-(2-(3-(2-propenyl)-4-cyanatophenyl)propan-2-yl)phenoxy)phenyl)sulfon, 2,2-Bis(3-(2-propenyl)-4-cyanatophenyl)propan, 2,2-Bis(3-(1-propenyl)-4-cyanatophenyl)propanund Bis(4-(4-cyanato-3-(2-propenyl)phenoxy)phenyl)sulfon; Cyanatester des Biphenyls, wie 4,4'-Dicyanatobiphenyl (CAS 1219-14-3), 2,4'-Dicyanatobiphenyl und 2,2'-Dicyanatobiphenyl; Phenol-Dicyclopentadien-Cyanatesterharze, wie Dicyclopentadienyl-bis(phenolcyanatester) (CAS 135507-71-0; Handelsbezeichnung: AroCy® XU-71787); Cyanatester von Phenol-Formaldehyd-harzen, welche durch sauer bzw. alkalisch katalysierte Kondensation von Phenolen, Naphtholen, Naphtalendiolen, Xylenolen oder Cresolen mit Formaldehyd hergestellt werden, wie zum Beispiel Resol-Cyanatester oder Novolak-Cyanatester (z.B. CAS 87397-54-4, CAS 153191-90-3, CAS 268734-03-8, CAS 30944-92-4 und CAS 173452-35-2; Beispiele für Handelsbezeichnungen: Primaset® PT-15, PT-30, PT-60, PT-90 und CT-90, sowie AroCy® XU-371); Cyanatester von Fluoroalkandiolen, wie 1,8-Dicyanatoperfluorooctan; Cyanatester von natürlich vorkommenden Polyphenolen, wie trans-3,5,4'-Tricyanatostilben; Cyanatester von Silanen mit phenolischen Resten, wie Dimethylbis(4-cyanatophenyl)silan; 1,1,1-Tris(4-cyanatophenyl)ethan (CAS 113151-22-7), 1,2,3-Tris(4-cyanatophenyl)propan; sowie endterminierte Cyanatester-Polymerharze, welche sich aus mindestens zwei gleichen oder unterschiedlichen Wiederholungseinheiten zusammensetzen, wobei das Rückgrat jeder Wiederholungseinheit mindestens einen zweiwertigen aromatischen Kohlenwasserstoffrest, wie Phenylen, Biphenylen und Naphthylen, oder 9H-Fluoren-9,9-diyl, enthält sowie mindestens eine verbrückende Einheit ausgewählt aus der Gruppe bestehend aus -CR$^3_2$-, -CR$^3$=CR$^3$-, =C=CR$^3_2$, -O-, -S-, -N=N-, -CH=N-, -C(=O)-, -C(=O)O-, -OC(=O)O-, -SO-, -SO$_2$-, O=P(O-)$_3$ oder einem zweiwertigen Cycloalkandiyl-Rest, wie tricyclo[5.2.1.0$^{2,6}$]decandiyl und Bicyclo[2.2.1]heptandiyl. Beispiele für Wiederholungseinheiten in Cyanatester-Polymerharzen sind Arylenether, Arylenethersulfone, oder Arylenetherketone.

Bei Rest R$^3$ handelt es sich jeweils unabhängig voneinander um die für R$^2$ genannten Reste.

Bevorzugt handelt es sich bei Komponente (A) um 2,2-Bis(4-cyanatophenyl)propan, 1,1-Bis(4-cyanatophenyl)ethan, Bis(4-cyanatophenyl)methan, 1,3-Bis(2-(4-cyanatophenyl)propan-2-yl)benzol, 2,2-Bis(3-(2-propenyl)-4-cyanatophenyl)propan, Bis(4-cyanatophenyl)thioether, Bis(4-cyanatophenyl)sulfon, Phenol-Dicyclopentadien-Cyanatesterharze sowie Cyanatester von Phenol-Formaldehyd-harzen. Besonders bevorzugt handelt es sich bei Komponente (A) um 2,2-Bis(4-cyanatophenyl)propan, Bis(4-cyanatophenyl)methan, 1,1-Bis(4-cyanatophenyl)ethan, 1,3-Bis(2-(4-cyanatophenyl)propan-2-yl)benzol, Bis(4-cyanatophenyl)thioether, Bis(4-cyanatophenyl)sulfon, Phenol-Dicyclopentadien-Cyanatesterharze sowie Cyanatester von Phenol-Formaldehyd-harzen. Insbesondere handelt es sich bei Komponente (A) um 1,1-Bis(4-cyanatophenyl)ethan, 1,3-Bis(2-(4-cyanatophenyl)propan-2-yl)benzol sowie Cresol- oder Phenol-Novolak-Cyanatester.

Es kann nur ein Cyanatesterharz (A) oder eine Mischung unterschiedlicher Cyanatesterharze (A) eingesetzt werden oder es können Prepolymere aus einem Cyanatester-Harz (A) oder Prepolymere aus unterschiedlichen Cyanatester-Harzen (A) sowie Mischungen aus prepolymeren Cyanatester-Harzen oder Mischungen aus prepolymeren Cyanatester-Harzen mit einer oder mehreren Cyanatesterharzen (A) eingesetzt werden.

Beispiel für ein Prepolymer aus einem Cyanatester-Harz (A) ist Bisphenol A-Dicyanat-Homopolymer (CAS 25722-66-1).

Bevorzugt handelt es sich bei Komponente (A) um eine Mischung von Cyanatestern von Phenolharzen mit weiteren Komponenten (A), besonders bevorzugt handelt es sich bei Komponente (A) um eine Mischung von Phenol- oder Cresol-Novolak-Cyanatester mit 1,1 Bis(4-cyanatophenyl) ethan.

Bevorzugt bilden die Komponenten (A) und (B) nach dem Aushärten makroskopisch homogen-einphasige Duromere, welche keine Entmischung, d.h. Ausölen oder Ausschwitzen des Organosiloxans (B) aus dem Vulkanisat, aufweisen und welche besonders bevorzugt transparent sind.


Verbindung (B)

(B) ist ein lineares Organosiloxan der allgemeinen Formel (I) wie weiter oben beschrieben. Organosiloxan (B) kann bei 23°C und 1013 hPa fest oder flüssig sein, wobei die flüssige Form bevorzugt ist.

Vorzugsweise weist Organosiloxan (B) einen Siedepunkt höher als 300°C, bevorzugt höher als 400°C, besonders bevorzugt höher als 500°C, insbesondere höher als 550°C, jeweils bei 1013 hPa, auf.

Beispiele für einwertige, SiC-gebundene, gesättigte aliphatische Kohlenwasserstoffreste R sind Alkylreste, wie der Methyl-, Ethyl-, n-Propyl-, iso-Propyl-, 1-n-Butyl-, 2-n-Butyl-, iso-Butyl-, tert-Butyl-, n-Pentyl-, iso-Pentyl-, neo-Pentyl-, tert-Pentylrest, n-Hexyl-, n-Heptyl-, n-Octyl-, 2,4,4-Trimethylpentyl-, 2,2,4-Trimethylpentyl-, 2-Ethylhexyl-, n-Nonyl-, n-Decyl-, n-Dodecyl-, n-Hexadecyl-, n-Octadecylrest; Cycloalkylreste, wie der Cyclopentyl-, Cyclohexyl-, Cycloheptyl- und Methylcyclohexylrest.

Bevorzugt handelt es sich bei Rest R um einwertige, SiC-gebundene Kohlenwasserstoffreste mit 1 bis 8 Kohlenstoffatomen, besonders bevorzugt um den Methylrest.

Beispiele für einwertige, SiC-gebundene aromatische, gegebenenfalls substituierte Kohlenwasserstoffreste $R^1$ sind Arylreste, wie der Phenyl-, Biphenyl-, Naphthyl-, Anthryl- und Phenanthrylrest; Alkarylreste, wie o-, m-, p-Tolylreste; Xylylreste und Ethylphenylreste; Aralkylreste, wie der Benzylrest, (9,10-Dihydro-9-oxa-10-phosphaphenanthren-10-oxid-10-yl)ethyl-, der α- und der β-Phenylethylrest; Halogenarylreste, wie der Fluorphenyl-, Chlorphenyl- und der Bromphenylrest.

Bevorzugt handelt es sich bei Rest $R^1$ um Halogen- und Phosphoratom-freie aromatische Kohlenwasserstoffreste, besonders bevorzugt um den Phenylrest.

Vorzugsweise bestehen die erfindungsgemäß eingesetzten Organosiloxane (B) aus drei bis fünf Einheiten der Formel (I) wobei pro Molekül (B) mindestens vier Reste $R^1$ vorhanden sind. Bevorzugt bestehen die erfindungsgemäß eingesetzten Organosiloxane (B) aus drei bis vier Einheiten der Formel (I) wobei pro Molekül mindestens vier Reste $R^1$ vorhanden sind und in jeder Einheit der Formel (I) mit a+b=2 gleichzeitig b≠0 erfüllt ist.

Besonders bevorzugt bestehen die erfindungsgemäß eingesetzten Organosiloxane (B) aus drei oder vier Einheiten der Formel (I) wobei pro Molekül mindestens vier Reste $R^1$ vorhanden sind und in jeder Einheit der Formel (I) b≠0 erfüllt ist.

Insbesondere bestehen die erfindungsgemäß eingesetzten Organosiloxane (B) aus drei Einheiten der Formel (I) wobei pro Molekül mindestens fünf Reste $R^1$ vorhanden sind und in jeder Einheit der Formel (I) b≠0 erfüllt ist.

Beispiele für die erfindungsgemäß eingesetzte Komponente (B) sind 1,3,5-Trimethyl-1,1,3,5,5-pentaphenyltrisiloxan (CAS 3390-61-2), 1,1,3,5,5-Pentamethyl-1,3,5-triphenyltrisiloxan, 1,5-Dimethyl-1,1,3,3,5,5-hexaphenyltrisiloxan, 1,1,5,5-Tetramethyl-1,3,3,5-tetraphenyltrisiloxan, 1,3,3,5-Tetramethyl-1,1,5,5-tetraphenyltrisiloxan (CAS 3982-82-9), 1,1,1-Triphenyl-3,3,5,5,5-pentamethyltrisiloxan, 1,1,1,5,5,5-Hexaphenyl-3,3-dimethyltrisiloxan, 3-Methyl-1,1,1,3,5,5,5-heptaphenyltrisiloxan, 1,3,5,5,5-Pentamethyl-1,1,3-triphenyltrisiloxan, 1,1,3,5-Tetramethyl-1,3,5,5-tetraphenyltrisiloxan, 1,3,5,7-Tetramethyl-1,1,3,5,7,7-hexaphenyltetrasiloxan (CAS 38421-40-8), 1,1,3,5,7,7-Hexamethyl-1,3,5,7-tetraphenyltetrasiloxan, 1,1,1,7,7,7-Hexamethyl-3,3,5,5-tetraphenyltetrasiloxan, 1,3,3,5,5,7-Hexamethyl-1,1,7,7-tetraphenyltetrasiloxan (CAS 6904-66-1), Decaphenyltetrasiloxan, 1,7-Dimethyl-1,1,3,3,5,5,7,7-octaphenyltetrasiloxan, 1,1,7,7-Tetramethyl-1,3,3,5,5,7-hexaphenyltetrasiloxan, 1,3,5,5,7-Pentamethyl-1,1,3,7,7-pentaphenyltetrasiloxan, 1,1,1,5,7,7,7-Heptamethyl-3,3,5-triphenyltetrasiloxan, 1,1,3,7,7-Pentamethyl-1,3,5,5,7-pentaphenyltetrasiloxan, 1,3,5,7,7,7-Hexamethyl-1,1,3,5-tetraphenyltetrasiloxan, 1,3,5,7,9-Pentamethyl-1,1,3,5,7,9,9-heptaphenylpentasiloxan, 1,1,9,9-Tetramethyl-1,3,3,5,5,7,7,9-octaphenylpentasiloxan, Dodecaphenylpentasiloxan, 1,3,3,5,5,7,7,9-Octamethyl-1,1,9,9-tetraphenylpentasiloxan (CAS 18758-39-9), 1,1,1,3,5,7,9,9,9-Nonamethyl-3,5,7-triphenylpentasiloxan (CAS 6689-19-6), 1,1,1,9,9,9-Hexamethyl-3,3,5,5,7,7-hexaphenylpentasiloxan, 1,1,3,5,7,9,9-Heptamethyl-1,3,5,7,9-pentaphenylpentasiloxan und 1,1,3,5,7,9,9,9-Octamethyl-1,3,5,7-tetraphenylpentasiloxan; wobei 3-Methyl-1,1,1,3,5,5,5-heptaphenyltrisiloxan, 1,3,5-Trimethyl-1,1,3,5,5-pentaphenyltrisiloxan, 1,1,3,5-Tetramethyl-1,3,5,5-tetraphenyltrisiloxan, 1,1,3,5,7,7-Hexamethyl-1,3,5,7-tetraphenyltetrasiloxan, 1,3,5,7-Tetramethyl-1,1,3,5,7,7-hexaphenyltetrasiloxan und 1,1,1,7,7,7-Hexamethyl-3,3,5,5-tetraphenyltetrasiloxan bevorzugt sind; 1,3,5-Trimethyl-1,1,3,5,5-pentaphenyltrisiloxan, 1,1,3,5,7,7-Hexamethyl-1,3,5,7-tetraphenyltetrasiloxan, 1,3,5,7-Tetramethyl-1,1,3,5,7,7-hexaphenyltetrasiloxan, besonders bevorzugt sind und 1,1,3,5,5-Pentaphenyl-1,3,5-trimethyltrisiloxan insbesondere bevorzugt ist.

Es kann nur ein Organosiloxan (B) oder eine Mischung unterschiedlicher Organosiloxane (B) eingesetzt werden.

Falls es sich bei Organosiloxan (B) um eine Mischung unterschiedlicher Organosiloxane (B) handelt, so beträgt die Gewichtsmittel-Molmasse Mw vorzugsweise 400 g/mol bis 1000 g/mol, bevorzugt 420 g/mol bis 900 g/mol, besonders bevorzugt 480 g/mol bis 750 g/mol, insbesondere 510 g/mol bis 650 g/mol.

Falls es sich bei Organosiloxan (B) um eine Mischung unterschiedlicher Organosiloxane (B) handelt, so beträgt die Zahlenmittel-Molmasse Mn vorzugsweise 300 g/mol bis 990 g/mol, bevorzugt 350 g/mol bis 890 g/mol, besonders bevorzugt 400 g/mol bis 740 g/mol, insbesondere 450 g/mol bis 640 g/mol.

Die erfindungsgemäßen Zusammensetzungen enthalten Organosiloxan (B) in Mengen von bevorzugt 1 bis 100 Gewichtsteilen, besonders bevorzugt 5 bis 50 Gewichtsteilen, insbesondere 5 bis 35 Gewichtsteilen, jeweils bezogen auf 100 Gewichtsteile der Komponente (A).

Zusätzlich zu den Komponenten (A) und (B) können die erfindungsgemäßen Zusammensetzungen weitere Stoffe enthalten, die unterschiedlich zu Komponenten (A) und (B) sind, wie z.B. Modifikator (C), Reaktivharz (D), Füllstoff (E), Härtungsbeschleuniger (F), Lösungsmittel (G) sowie weitere Bestandteile (H).

## Verbindung (C)

Bei den gegebenenfalls eingesetzten Modifikatoren (C) handelt es sich um Organosiliciumverbindungen (C1), welche verschieden sind von Komponente (B), enthaltend Einheiten der Formel

$$R^4{}_m(OR^5)_n SiO_{(4-m-n)/2} \qquad (II),$$

worin

R$^4$ gleich oder verschieden sein kann und Wasserstoffatom oder einwertige oder zweiwertige, SiC-gebundene, gegebenenfalls substituierte, gegebenenfalls Heteroatomen enthaltende, Kohlenwasserstoffreste bedeutet,

R$^5$ gleich oder verschieden sein kann und Wasserstoffatom oder einwertige, gegebenenfalls substituierte, gegebenenfalls Heteroatomen enthaltende, Kohlenwasserstoffreste mit 1 bis 18 Kohlenstoffatomen bedeutet,

m 0, 1, 2 oder 3, bevorzugt 1, 2 oder 3, ist,

n 0, 1, 2 oder 3, bevorzugt 0, 1 oder 2, besonders bevorzugt 0 oder 1, insbesondere 0, ist und

mit der Maßgabe, dass in Formel (II) die Summe m+n<3 beträgt, und mit der Maßgabe, dass sie nicht gleichzeitig auch unter die Definition der linearen Organopolysiloxane (B) fallen.

Beispiele für einwertige, SiC-gebundene, gegebenenfalls substituierte, gegebenenfalls Heteroatomen enthaltende, Kohlenwasserstoffreste R$^4$ sind die für R und R$^1$ genannten Reste; Kohlenwasserstoffreste mit aliphatischen Kohlenstoff-Kohlenstoff-Mehrfachbindungen, wie Vinyl-, 1-Propenyl-, 2-Propenyl-, Vinylcyclohexyl-, Norbornenyl-, Norbornenylethyl-, Bicyclo[2.2.1]hept-5-en-2-yl, Dicyclopentenyl-, Cyclohexenyl-, 4-Vinylphenyl-, Styryl-, Arylethinyl-, Ethinylphenyl-, (1-Propenyl)phenyl- und (2-Propenyl)phenylrest; Imidoreste, wie N-(5-Ethinylphtalimido)phenyl-, N-(5-(Phenylethinyl)phtalimido)phenyl-, Nadimidophenyl-, Maleimidophenyl- und 3-Maleimidopropylrest; Epoxidreste, wie 3-Glycidoxypropyl-, 4-(Oxiran-2-yl)phenyl-, Oxiran-2-yl- und 2-(3,4-Epoxycyclohexyl)ethylrest; Acrylat- und Methacrylatreste, wie 3-Methacryloxypropyl-, Acryloxymethyl- und Methacryloxymethylrest; Aminreste, wie Aminophenyl-, 3-Aminopropyl-, N-(2-Aminoethyl)-3-aminopropyl- und N-Phenylaminomethylrest; Hydroxyalkyl- und Hydroxyarylreste, wie Hydroxypropyl-, Hydroxyphenyl- und (4-Hydroxy-3-propenyl)phenylrest; sowie Bicyclo[4.2.0]octa-1,3,5-trienyl (= Benzocyclobutenyl)-, Cyanatophenyl-, Isocyanatophenyl-, Polycaprolactonylamidopropyl-, Polycaprolactamylamidopropyl- und der 3-Isocyanatopropylrest.

Beispiele für zweiwertige, SiC-gebundene, gegebenenfalls substituierte, gegebenenfalls Heteroatomen enthaltende, Kohlenwasserstoffreste R$^4$ sind der Phenylen- und Biphenylenrest, welche bevorzugt zwei Einheiten der Formel (II) miteinander verbinden.

Bevorzugt handelt es sich bei Rest R$^4$ um Wasserstoffatom oder den Phenylen-, Phenyl-, Methyl-, Hydroxyphenyl-, Maleimidophenyl-, Cyanatophenyl- und Aminophenylrest, besonders bevorzugt um den Methyl-, Phenyl- und Hydroxyphenylrest. Bevorzugt handelt es sich bei Rest R$^5$ um den Methyl-, Ethyl-, n-Propyl-, iso-Propyl-, n-Butyl-, sec-Butyl-, tert-Butyl- oder iso-Butylrest, besonders bevorzugt um den Methyl- oder Ethylrest.

Beispiele für Organosiliciumverbindungen (C1) sind 1,3,5,7-Tetrakis(2-(3,4-epoxycyclohexyl)ethyl)-1,3,5,7-tetramethylcyclotetrasiloxan (CAS 121225-98-7), Bis[2-(3,4-epoxycyclohex-1-yl)ethyl]-1,1,3,3-tetramethyldisiloxan (CAS 18724-32-8), 1,3-Bis(norbornenylethyl)-1,1,3,3,-tetramethyldisiloxan, 2,4,6,8-Tetramethyl-2,4,6,8-tetrakis[3-(glycidoxy)propyl]cyclotetrasiloxan (CAS 257284-60-9), Organopolysiloxan der mittleren Zusammensetzung $(PhSiO_{3/2})_{20}$ $(PhSi(OMe)O_{2/2})_{66}(PhSi(OMe)_2O_{1/2})_{14}$ und einer gewichtsmittleren Molmasse Mw = 2190 g/mol, Organopolysiloxan der mittleren Zusammensetzung $(PhSiO_{3/2})_{75}(Me_3SiO_{1/2})_{25}$ und einer gewichtsmittleren Molmasse Mw = 1380 g/mol, Octa(epoxycyclohexyl)-POSS (CAS 187333-74-0), Octaphenyl-POSS (CAS 5256-79-1), Octaphenylcyclotetrasiloxan (CAS 546-56-5), 2,4,6,8-Tetramethyl-2,4,6,8-tetraphenylcyclotetrasiloxan (CAS 77-63-4), 1,1,3,3-Tetramethyl-5,5,7,7-tetraphenylcyclotetrasiloxan (CAS 1693-47-6) und 1,9-Dimethoxy-1,3,5,7,9-pentamethyl-1,3,5,7,9-pentaphenylpentasiloxan.

Bei den gegebenenfalls eingesetzten Modifikatoren (C) handelt es sich weiterhin um Cyanatester-Gruppensowie Siloxan (=Si-O-Si≡)-Einheiten-freie, thermoplastische organische Polymere ("Thermoplaste") (C2), welche mindestens zwei Wiederholungseinheiten aufweisen, ausgewählt aus der Gruppe bestehend aus Polyarylenen, Polyarylenethern, Polyarylensulfiden, Polysulfonen, Polyethersulfonen, Polyetherketonen, Polyetheretherketonen, Polyetherketonketonen, Polyetheretherketonketonen, Polyimiden, Polybenzimidazolen, Polyamiden, Poly(amidimiden), Polyarylaten, Polyesterimiden, Polyetherimiden, Polyaramiden, Polyacrylaten, Polyhydantoinen, Flüssigkristallpolymeren, Polycarbonaten, Polyestercarbonaten und Polyethylenterephthalaten; sowie deren Mischungen oder copolymere Verbindungen. Die Thermoplaste (C2) weisen entweder reaktive oder chemisch inerte Endgruppen auf. Reaktive Endgruppen verbleiben herstellungsbedingt bei der Polymerisationsreaktion aus den entsprechenden reaktiven Gruppen der Monomere. Dabei handelt es sich bevorzugt um Hydroxy-, Amino-, Carboxy- und Isocyanatogruppen. Beispiele für chemisch inerte Endgruppen sind der Methyl- oder Phenylrest. Die Thermoplaste (C2) haben Glasübergangstemperaturen oberhalb von 100°C, bevorzugt von 130°C bis 450°C, besonders bevorzugt von 150°C bis 400°C, insbesondere von 180°C bis 350°C; die zahlenmittlere Molmasse Mn von (C2) beträgt vorzugsweise 1.100 bis 100.000 g/mol, bevorzugt 2.000 bis 50.000 g/mol, besonders bevorzugt 2.000 bis 30.000 g/mol, insbesondere 3.000 bis 20.000 g/mol.

Bei den gegebenenfalls eingesetzten Modifikatoren (C) handelt es sich weiterhin um organische, von Siloxan (≡Si-O-Si≡)-Einheiten freie, monofunktionelle Cyanatester (C3) der allgemeinen Formel

$$R^6\text{-OCN} \qquad (III),$$

worin $R^6$ ein einwertiger, gegebenenfalls substituierter, gegebenenfalls Heteroatom enthaltender, aromatischer Kohlenwasserstoffrest bedeutet mit der Maßgabe, dass die Cyanatester-Gruppe direkt an ein aromatisches Kohlenstoffatom gebundenen vorliegt. Beispiele für geeignete Komponenten (C3) sind Cyanatobenzol (CAS 1122-85-6), 1-Cyanato-4-cumylbenzol (CAS 110215-65-1), 1-Cyanato-4-tert-butylbenzol, 1-Cyanato-2-tert-butylbenzol, 4-Cyanatobiphenyl, 1-Cyanatonaphtalin, 2-Cyanatonaphtalin, 4-Cyanatononylbenzol, 4-Chlor-cyanatobenzol, 4-Cyanatodiphenylsulfon, 4-Cyanatotoluol, 4-Cyanatodiphenylether, 4-Cyanatodiphenylketon, 4-(Cyanato)methoxybenzol; sowie Propenyl-substituierte monofunktionelle Cyanatester, wie 2-(2-Propenyl)cyanatobenzol oder 2-(1-Propenyl)cyanatobenzol.

Bevorzugt weisen die Modifikatoren (C3) einen Siedepunkt bei 1013 hPa von mindestens 150°C, besonders bevorzugt mindestens 180°C, insbesondere mindestens 220°C auf.

Zu den gegebenenfalls eingesetzten Modifikatoren (C) zählen weiterhin monomere aromatische, von Siloxan (=Si-O-Si=)-Einheiten freie, Hydroxy-Verbindungen (C4), welche neben den OH-Gruppen als weitere reaktive Einheiten nur noch zur Polymerisationsreaktion geeignete aliphatische Kohlenstoff-Kohlenstoff-Mehrfachbindungen enthalten können.

Bevorzugt handelt es sich bei den gegebenenfalls vorhandenen reaktiven aliphatischen Kohlenstoff-Kohlenstoff-Mehrfachbindungen in Modifikator (C4) um Propenyl-Gruppen; besonders bevorzugt liegen in Modifikator (C4) die Hydroxy-Gruppen und die gegebenenfalls vorhandenen Propenyl-Gruppen direkt an aromatische Kohlenstoffatome gebunden vor.

Beispiele für Modifikatoren (C4) ohne reaktive aliphatische Kohlenstoff-Kohlenstoff-Mehrfachbindungen sind einwertige, gegebenenfalls substituierte Phenole, wie Phenol, Kresol, Naphthol, Biphenylol, Thymol, Gujacol (2-Methoxyphenol), 4-Cumylphenol, 4-Benzylphenol, 4-Isopropylphenol, 4-tert-Butylphenol, 2-tert-Butylphenol, 2,4-Di-tert-butylphenol, 2,4-Bis($\alpha,\alpha$-dimethylbenzyl)phenol, Nonylphenol, Xylenol oder 2,6-Dinonylphenol; mehrwertige Phenole, wie Brenzcatechin (Benzol-1,2-diol), Resorcin (Benzol-1,3-diol), Hydrochinon (Benzol-1,4-diol), Pyrogallol (Benzol-1,2,3-triol), Phloroglucin (Benzol-1,3,5-triol), Dihydroxynaphthalin; aromatische Verbindungen mit zwei (= "Bisphenole") oder mehr Hydroxyphenyl-Resten, wie Bis-(2-hydroxyphenyl)-methan, 2,2-Bis(3-methyl-4-hydroxyphenyl)propan (Bisphenol C), 1,1-Bis(4-hydroxyphenyl)ethan (Bisphenol E), 2,2-Bis(4-hydroxyphenyl)propan (Bisphenol A), 2,2-Bis(4-hydroxyphenyl)butan (Bisphenol B), 2,2-Bis(4-hydroxyphenyl)hexafluorpropan (Bisphenol AF), 9,9-Bis(4-hydroxyphenyl)fluoren (Bisphenol FL), Bis(4-hydroxyphenyl)sulfon (Bisphenol S), 1,3-Bis(2-(4-hydroxyphenyl)-2-propyl)benzol (Bisphenol M), Bis(4-hydroxyphenyl)methan (Bisphenol F), Bis(4-hydroxyphenyl)ether, Bis(4-hydroxyphenyl)thioether und 1,1,1-Tris(4-hydroxyphenyl)ethan.

Beispiele für Modifikatoren (C4) mit Propenyl-Gruppen sind 2,2-Bis(3-(2-propenyl)-4-hydroxyphenyl)propan (CAS 1745-89-7), 2-Methoxy-4-(2-propenyl)-phenol (CAS 97-53-0), 4-(2-Propenyl)-2,6-dimethoxyphenol (CAS 6627-88-9), 2-(2-Propenyl)-6-methylphenol (CAS 3354-58-3), 2-(2-Propenyl)phenol (CAS 1745-81-9), 5,5'-Bis(2-propenyl)-2,2'-biphenyldiol (CAS 528-43-8), 3',5-Bis(2-propenyl)-2,4'-biphenyldiol (CAS 35354-74-6), α,α'-Bis(3-(2-propenyl)-4-hydroxyphenyl)-p-diisopropylbenzol, 2,2'-Bis(3-(2-propenyl)-4-hydroxyphenyl)perfluorpropan, 9,9'-Bis(3-(2-propenyl)-4-hydroxyphenyl)fluoren, α,α'-Bis(3-(1-propenyl)-4-hydroxyphenyl)-p-diisopropylbenzol, 2,2'-Bis(3-(1-propenyl)-4-hydroxyphenyl)perfluorpropan, 9,9'-Bis(3-(1-propenyl)-4-hydroxyphenyl)fluoren, 4-{1-[4-Hydroxy-3-(2-propenyl)phenyl]propyl}-2-(prop-2-en-1-yl)phenol, 1,1'-(1,3-Phenylendioxy)bis(3-(2-(2-propenyl)phenoxy)propan-2-ol) (CAS 110866-35-8) und Bis(3-(2-propenyl)-4-hydroxyphenyl)sulfon (CAS 41481-66-7).

Bevorzugte Modifikatoren (C4) sind Biphenylol, 2-Methoxy-4-(2-propenyl)-phenol, 4-Cumylphenol, 4-Isopropylphenol, 4-tert-Butylphenol, 2-tert-Butylphenol, Bisphenole, 1,1,1-Tris(4-hydroxyphenyl)ethan, 2,2-Bis(3-(2-propenyl)-4-hydroxyphenyl)propan, 4-{1-[4-Hydroxy-3-(prop-2-en-1-yl)phenyl]propyl}-2-(prop-2-en-1-yl)phenol, 1,1'-(1,3-Phenylendioxy)bis(3-(2-(prop-2-enyl)phenoxy)propan-2-ol) und 2-(2-Propenyl)phenol; wobei 2-Methoxy-4-(2-propenyl)-phenol, 4-Cumylphenol 4-tert-Butylphenol, 2,2-Bis(3-(2-propenyl)-4-hydroxyphenyl)propan, 4-{1-[4-Hydroxy-3-(prop-2-en-1-yl)phenyl]propyl}-2-(prop-2-en-1-yl)phenol, 1,1'-(1,3-Phenylendioxy)bis(3-(2-(prop-2-enyl)phenoxy)propan-2-ol), Bis(3-(2-propenyl)-4-hydroxyphenyl)sulfon, sowie die Bisphenole B, E, F, M und S besonders bevorzugt sind.

Falls die erfindungsgemäßen Zusammensetzungen Modifikator (C) enthalten kann entweder nur ein Modifikator (C1) bis (C4) oder es können mehrere unterschiedliche Modifikatoren (C1) bis (C4) eingesetzt werden.

Falls die erfindungsgemäßen Zusammensetzungen Modifikator (C1), (C2) oder (C3) enthalten, werden Mengen von bevorzugt 1 bis 40 Gewichtsteilen, besonders bevorzugt 1 bis 30 Gewichtsteilen, insbesondere 1 bis 20 Gewichtsteilen, eingesetzt, jeweils bezogen auf 100 Gewichtsteile der Mischung aus Komponenten (A) und (B).

Falls die erfindungsgemäßen Zusammensetzungen Modifikator (C4) enthalten, liegt das Molverhältnis von der Summe der in der erfindungsgemäßen Zusammensetzung vorhandenen Cyanatester-Gruppen zu der Summe der reaktiven funktionellen Hydroxy-Gruppen in Komponente (C4) bevorzugt im Bereich von 60:40 bis 99:1, besonders bevorzugt von 70:30 bis 95:5.

## Verbindung (D)

Zu den gegebenenfalls eingesetzten Reaktivharzen (D) gehören von Cyanatester-Gruppen sowie Siloxan ($\equiv$Si-O-Si$\equiv$)-Einheiten freie, polymerisierbare organische Verbindungen ausgewählt aus der Gruppe bestehend aus Epoxiden (D1) und Imiden (D2) mit der Maßgabe, dass Epoxide (D1) pro Molekül mindestens zwei, bevorzugt mindestens zwei an aromatische Kohlenstoffatome gebundene, gegebenenfalls substituierte, Glycidyloxy-, Glycidyloxycarbonyl-, Glycidylamino-, Diglycidylamino- oder Oxiranyl-Gruppen, aufweisen; und dass Imide (D2) pro Molekül mindestens zwei, bevorzugt mindestens zwei an aromatische Kohlenstoffatome gebundene, gegebenenfalls substituierte, 5-Ethinylphtalimido-, 5-(Phenylethinyl)phtalimido-, Nadimido-, Benzocyclobutenphtalimido- oder Maleimido-Gruppen aufweisen; wobei die Maleimido-, Glycidyloxy-, Glycidylamino-, Diglycidylamino-Gruppen besonders bevorzugt sind.

Bevorzugt enthalten die gegebenenfalls eingesetzten Reaktivharze (D) pro Molekül mindestens zwei, gegebenenfalls substituierte, gegebenenfalls Heteroatom enthaltende, aromatische Kohlenwasserstoffreste mit jeweils einer an ein aromatisches Kohlenstoffatom gebundenen Maleimido-, Glycidyloxy-, Glycidyloxycarbonyl-, Glycidylamino- oder Diglycidylamino-Gruppe. Besonders bevorzugt handelt es sich bei (D) um Verbindungen mit mindestens zwei, gegebenenfalls substituierten, gegebenenfalls Heteroatom enthaltenden, aromatischen Kohlenwasserstoffresten mit jeweils einer an ein aromatisches Kohlenstoffatom gebundenen Maleimido-, Glycidyloxy-, Glycidylamino- oder Diglycidylamino-Gruppe, wobei die, gegebenenfalls substituierten, gegebenenfalls Heteroatom enthaltenden, aromatischen Kohlenwasserstoffreste über eine kovalente Bindung oder eine verbrückende Einheit, welche mindestens eine funktionelle Gruppe ausgewählt aus der Gruppe bestehend aus -CR$^7_2$-, -CR$^7$=CR$^7$-, =C=CR$^7_2$, -O-, -S-, -N=N-, -CH=N-, -C(=O)-, -C(=O)O-, -OC(=O)O-, -S(O)$_2$-, O=P(O-)$_3$, Phenylen, Arylen, Biphenylen, Biarylen, Naphthylen oder Cycloalkandiyl-Gruppen, wie Tricyclo[5.2.1.0$^{2,6}$]decandiyl oder Bicyclo[2.2.1]heptandiyl, enthält, miteinander verbunden sind.

Bei Rest R$^7$ handelt es sich jeweils unabhängig voneinander um die für R$^2$ genannten Reste.

Bevorzugt weist Verbindung (D) keine Heteroatom-enthaltenden aromatischen Kohlenwasserstoffreste auf.

Bevorzugt sind Epoxidharze (D1) mit Cyanatesterharz (A) copolymerisierbar.

Bevorzugt sind Imidharze (D2) mit Cyanatesterharz (A) nicht copolymerisierbar.

Beispiele für Epoxidharze (D1) sind Glycidylether von Phenolverbindungen, wie 2,2-Bis(4-glycidyloxyphenyl)propan (CAS 1675-54-3), Bis(4-glycidyloxyphenyl)methan (CAS 2095-03-6), 1,2-Bis(glycidyloxy)benzol (CAS 2851-82-3), 1,3-Bis(glycidyloxy)benzol (CAS 101-90-6), 1,4-Bis(glycidyloxy)benzol (CAS 129375-41-3), 3,5,3',5'-Tetramethyl-4,4'-diglycidyloxybiphenyl (CAS 85954-11-6), 2,2-Bis(3,5-dibromo-4-glycidyloxyphenyl)propan (CAS 3072-84-2), Tris(4-glycidyloxyphenyl)methan (CAS 66072-38-6), 1,1,2,2-Tetrakis(4-glycidyloxyphenyl)ethan (CAS 7328-97-4), 4,4'-Bis(glycidyloxyphenyl)sulfon (CAS 878-43-1), 9,9-Bis(4-glycidyloxyphenyl)fluoren (CAS 47758-37-2), 1,6-(Diglycidyloxy)naphthalen (CAS 27610-48-6); Glycidylether von Phenol-, Naphthol-, Naphtalendiol-, Bisphenol- oder Cresol-Formaldehyd-Kondensationsprodukten, wie Cresol-Novolak-Glycidylether (CAS 29690-82-2), Phenol-Novolak-Glycidylether (CAS 9003-36-5, CAS 28064-14-4, CAS 158163-01-0) und Bisphenol A-Epichlorhydrin-Formaldehyd-Copolymer (CAS 28906-96-9); Glycidylether von Phenol- oder Cresol-Dicyclopentadien-Kondensationsprodukten, wie CAS 68610-51-5 und CAS 119345-05-0; Glycidylester von aromatischen Carbonsäuren, wie Diglycidylphthalat (CAS 7195-45-1), Diglycidylterephthalat (CAS 7195-44-0), Diglycidylisophthalat (CAS 7195-43-9), Triglycidyl-1,2,3-benzoltricarboxylat, Triglycidyl-1,2,4-benzoltricarboxylat (CAS 7237-83-4) und Triglycidyl-1,3,5-benzoltricarboxylat (CAS 7176-19-4); Glycidylderivate von aromatischen Aminen und Aminophenolen, wie N,N-Diglycidyl-4-glycidyloxyanilin (CAS 5026-74-4), 4,4'-Methylenbis(N,N-diglycidylanilin) (CAS 28768-32-3), N,N,N',N'-Tetraglycidyl-4,4'-diamino-3,3'-diethyldiphenylmethan (CAS 130728-76-6) und m-(Glycidyloxy)-N,N-diglycidylanilin (CAS 71604-74-5); Glycidyl-endterminierte thermoplastische Polymere, welche beispielsweise durch Reaktion von Amino- oder Hydroxyterminierten Thermoplasten (C2) mit Epichlorhydrin hergestellt werden können, wie Glycidyloxy- oder Digylcidylaminoendterminierte Polysulfone; Homopolymere oder Copolymere Epoxidharze, wie Bisphenol A-Epichlorhydrin-Copolymer (CAS 25036-25-3), 2,2',6,6'-Tetrabrombisphenol A-Epichlorhydrin-Copolymer (CAS 40039-93-8) und Reaktionsprodukte von Diglycidylbisphenol A mit m-Phenylenbis(methylamin) (CAS 110839-13-9); sowie Mischungen verschiedener Epoxidharze (D1).

Beispiele für polymerisierbare Maleimidharze (D2) sind 4,4'-Bis(maleimidophenyl)methan (CAS 13676-54-5), m-Xylylenbismaleimid (CAS 13676-53-4), 1,1'-(2,2,4-Trimethylhexan-1,6-diyl)bis-1H-pyrrole-2,5-dion (CAS 39979-46-9), Bis(3-ethyl-5-methyl-4-maleimidophenyl)methan (CAS 105391-33-1), Bis(4-maleimido-3-methylphenyl) methan, Bis(4-maleimido-3,5-dimethylphenyl)methan, 1,1-Bis(4-maleimidophenyl)cyclohexan, 2,4-Bismaleimidotoluol (CAS 6422-83-9), N,N'-1,2-Phenylenbismaleimid (CAS 13118-04-2), N,N'-1,3-Phenylenbismaleimid (CAS 3006-93-7), N,N'-1,3-Phenylenbismaleimid (CAS 3278-31-7), Copolymere von Bismaleimiden und aromatischen Aminen, wie 4,4'-Bis(maleimidophenyl)methan-/4,4'-Bis(aminophenyl)methan-Copolymer (CAS 26140-67-0); Reaktionsprodukt eines Kondensationsproduktes aus Formaldehyd und Anilin mit Maleinsäureanhydrid (CAS 28630-26-4, CAS 67784-74-1); Bis(4-maleimidophenyl)ether, 2,2-Bis[4-(maleimidophenoxy)phenyl]propan (CAS 79922-55-7), Bis(4-maleimidophenyl) sulfon (CAS 13102-25-5), Bis(4-maleimidophenyl)keton, 1,1'-(benzol-1,3-diyldimethandiyl)bis(1H-pyrrol-2,5-dion) (CAS 13676-53-4), 4,4'-Bis(maleimido)-1,1'-biphenyl (CAS 3278-30-6), 4,4'-Bis(3-maleimidophenoxy)diphenylsulfon oder Maleimid-terminierte thermoplastische Polymere (D2), welche beispielsweise durch Reaktion von Amino-terminierten Thermoplasten (C2) mit Maleinsäureanhydrid hergestellt werden können, wie beispielsweise Maleimid-terminierte Polysulfonether; sowie Mischungen verschiedener Maleimidharze (D2).

Falls die erfindungsgemäßen Zusammensetzungen polymerisierbare Reaktivharze (D) enthalten, liegt das Molverhältnis von der Summe der in der erfindungsgemäßen Zusammensetzung vorhandenen Cyanatester-Gruppen zu der Summe der reaktiven funktionellen Epoxid- oder Imido-Gruppen in Komponente (D) bevorzugt im Bereich von 10:90 bis 99:1, besonders bevorzugt von 30:70 bis 95:5, insbesondere von 50:50 bis 90:10.

Falls die erfindungsgemäßen Zusammensetzungen polymerisierbare Imide (D2) enthalten, wird bevorzugt eine weitere "Koppler"-Komponente hinzugefügt, welche sowohl mit Cyanatester-Gruppen als auch mit Imido-Gruppen, bevorzugt Maleimido-Gruppen, copolymerisierbar ist. Dabei kann es sich um Cyanatester (A), Modifikatoren (C3) oder Modifikatoren (C4) handeln, welche an aromatische Kohlenstoffatome gebundene Propenyl-Gruppen aufweisen; oder aromatische Kohlenwasserstoffverbindungen, welche pro Molekül eine oder mehrere an aromatische Kohlenstoffatome gebundene Hydroxy-Gruppen sowie eine an ein aromatisches Kohlenstoffatom gebundene Imido-Gruppe, bevorzugt Maleimido-Gruppe, aufweisen, wie beispielsweise N-(4-Hydroxyphenyl)maleimid (CAS 7300-91-6).

Falls die erfindungsgemäßen Zusammensetzungen polymerisierbares Imidharz (D2) enthalten liegt das Molverhältnis von der Summe der Imido-Gruppen zu der Summe der Propenylgruppen aus Komponenten (A), (C3) und (C4) in einem Bereich von bevorzugt 45:55 bis 95:5, besonders bevorzugt 60:40 bis 90:10, insbesondere 65:35 bis 80:20.

**Verbindung (E)**

Bei den in den erfindungsgemäßen Zusammensetzungen eingesetzten Füllstoffen (E) kann es sich um beliebige, bisher bekannte Füllstoffe handeln.

Bei den erfindungsgemäß eingesetzten Füllstoffen (E) handelt es sich bevorzugt um solche, die sich bei 23°C und 1000 hPa weniger als 1 Gew.-% in Toluol lösen.

Beispiele für Füllstoffe (E) sind nicht verstärkende teilchenförmige Füllstoffe, also Füllstoffe mit einer BET-Oberfläche von vorzugsweise bis zu 50 $m^2/g$, beispielsweise aus Quarz, Glas, Cristobalit, Diatomeenerde; in Wasser unlösliche Silikate, wie Calciumsilikat, Calciummetasilikat, Magnesiumsilikat, Zirkoniumsilikat, Talkum, Glimmer, Feldspat, Kaolin, Zeolithe; Metalloxide, wie Aluminium-, Titan-, Eisen-, Bor- oder Zinkoxide bzw. deren Mischoxide; Bariumsulfat, Calciumcarbonat, Marmormehl, Gips, Siliciumnitrid, Siliciumcarbid, Bornitrid, Kunststoffpulver, wie Polyacrylnitril- oder Polyetherimidpulver; verstärkende Füllstoffe, also Füllstoffe mit einer BET-Oberfläche von mehr als 50 $m^2/g$, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; Aluminiumtrihydroxid, Magnesiumhydroxid, hohlkugelförmige Füllstoffe, wie Mikroballone aus Glas, Galskugeln, phenolische Thermokugeln oder keramische Mikrokugel, wie z.B. solche erhältlich unter der Handelsbezeichnung Zeeospheres™ bei der Fa. 3M Deutschland GmbH in D-Neuss; faserförmige Füllstoffe, wie Wollastonit, Montmorrilonit, Basalt, Bentonit sowie geschnittene und/oder gemahlene Fasern aus Glas (Glaskurzfasern) oder Mineralwolle; metallische Fasern, Fasern bestehend aus Metalloxiden, Glas, Keramik, Kohlenstoff oder Kunststoff; sowie Naturfaser aus Cellulose, Flachs, Hanf, Holz oder Sisal.

Zur Herstellung von Hochleistungs-Verbundwerkstoffen enthalten die erfindungsgemäßen Harzzusammensetzungen bevorzugt Faserverstärkung (E1) aus allen bisher bekannten faserbildenden Materialien, bevorzugt aus Polypropylen, Polyethylen, Polytetrafluorethylen, Polyester; metallischen Fasern aus Stahl; oxidische und nicht oxidische Keramik, wie Siliciumcarbid, Aluminiumoxid, Siliciumdioxid, Boroxid; Glas, Quarz, Kohlenstoff, Aramid, Asbest, Graphit, Acrylnitril, Poly(benzothiazol), Poly(benzimidazol), Poly(benzoxazol), Titandioxid, Bor und aromatische Polyamidfasern, wie Poly(p-phenylenterephthalamid). Die Fasern (E1) können in unterschiedlichen Formen eingesetzt werden, z.B. als kontinuierliche Seile mit jeweils 1000 bis 400000 Einzelfilamenten, Gewebe, Gelege, Gestricke, Geflechte, Matten, Vliesen, Whisker, geschnittene oder gemahlene Kurzfasern oder zufälliges Faserfilz. Die bevorzugten Fasern sind Kohlenstofffasern, aromatische Polyamidfasern, keramische und Glasfasern.

Die genannten Füllstoffe (E) können gegebenenfalls oberflächenbehandelt, z.B. hydrophobiert sein, beispielsweise durch die Behandlung mit Organosilanen bzw. -siloxanen, Stearinsäure oder mit einem oder mehreren Modifikatoren (C). Auch können die Füllstoff-Oberflächen modifiziert werden, um eine chemische Anbindung an die ausgehärtete Harzmatrix zu ermöglichen, z.B. durch Oxidation oder Behandlung mit Säuren oder Basen. Bevorzugt sind die Füllstoffe (E) oberflächenbehandelt.

Die erfindungsgemäß eingesetzten Füllstoffe (E) können sowohl jeder einzeln als auch in beliebiger Mischung untereinander eingesetzt werden. Falls eine Mischung unterschiedlicher Füllstoffe (E) eingesetzt wird handelt es sich bevorzugt um Füllstoffe (E1).

Falls die erfindungsgemäße Zusammensetzung Füllstoffe (E) enthält, beträgt der Anteil der Komponente (E) bezogen auf den nicht ausgehärteten Verbundwerkstoff bevorzugt 5 bis 80 Gew.-%, besonders bevorzugt 10 bis 70 Gew.-%, insbesondere 15 bis 60 Gew.-%. Bevorzugt handelt es sich dabei um faserförmige Füllstoffe (E1).

Falls die erfindungsgemäße Zusammensetzung sowohl Faserverstärkung (E1) als auch nicht-faserförmige Füllstoffe (E) enthält, beträgt das Gewichtsverhältnis der Komponenten (E):(E1) bevorzugt höchstens 50%.

## Verbindung (F)

Die erfindungsgemäße Zusammensetzung kann in Gegenwart eines Härtungsbeschleunigers (F) vernetzt werden, wie er aus dem Stand der Technik bekannt ist. Als Härtungsbeschleuniger (F1) eignen sich beispielsweise Säuren und Basen, wie Salzsäure, Phosphinsäure, Phosphonsäure, Phosphorsäure, aliphatische und aromatische Amine, wie Triethylamin, N,N-Dimethylanilin und Pyridin; Amidine, Guanidine, Natriumhydroxid; Halogenide, wie Aluminiumchlorid, Lithiumchlorid, Borfluorid, Eisenchlorid, Zinkchlorid, Zinkfluorid, Zinnchlorid, Cobaltchlorid und Titanchlorid; sowie metallorganische Verbindungen, wie MetallAlkoholate, Metall-Carboxylate oder Metall-Chelat-Komplexe von Aluminium, Kupfer, Zink, Titan, Eisen, Mangan, Cobalt, Chrom oder Nickel. Beispiele für metallorganische Verbindungen sind Cobalt(II)-naphthenat, Nickel(II)-naphthenat, Eisen(III)-naphthenat, Kupfer(II)-naphthenat, Mangan(II)-naphthenat, Aluminium(III)-naphthenat Zink(II)-naphthenat, Zink(II)-octoat, Zink(II)-acetylacetonat, Eisen(III)-acetylacetonat, Cobalt(II)-acetylacetonat, Chrom(III)-acetylacetonat, Aluminium(III)-acetylacetonat und Kupfer(II)-acetylacetonat.

Falls ein Beschleuniger (F1) für die Vernetzung der erfindungsgemäßen Zusammensetzungen eingesetzt wird so handelt es sich bevorzugt um eine Kombination einer metallorganischen Verbindung und einem Co-Beschleuniger, der mindestens ein aktives Proton besitzt, besonders bevorzugt um eine Kombination einer metallorganischen Verbindung und einem Phenol (C4), wie z.B. Nonylphenol.

Falls die erfindungsgemäßen Zusammensetzungen Beschleuniger (F1) enthalten, handelt es sich um Mengen von bevorzugt 0,00001 bis 5 Gewichtsteilen bezogen auf 100 Gewichtsteile Komponente (A), wobei metallorganische Verbindung (F1) besonders bevorzugt in Mengen von 0,0001 bis 0,02 Gewichtsteilen, bezogen auf 100 Gewichtsteile Komponente (A), eingesetzt werden.

Falls die erfindungsgemäßen Zusammensetzungen Imido-Gruppen-haltige Organosiliciumverbindungen (C1) oder Imidharz (D2) enthalten, können radikalbildende Härtungsbeschleuniger (F2), wie organische Peroxide, z.B. Dicumylperoxid, Di-tert-butylperoxid, Dibenzoylperoxid, Dilauroylperoxid, 1,1-Bis(tert-butylperoxy)cyclohexan und tert-Butylperbenzoat; oder Azoverbindungen, wie Azobis(isobutyronitril); entweder allein oder zusätzlich zu (F1) verwendet werden. Falls die erfindungsgemäßen Zusammensetzungen radikalbildende Härtungsbeschleuniger (F2) enthalten, handelt es sich um Mengen von bevorzugt 0,1 bis 2 Gewichtsteilen bezogen auf 100 Gewichtsteile der Summe aus Imido-Gruppen-haltigen Modifikator (C1) und Imidharz (D2). Bevorzugt werden keine radikalbildenden Härtungsbeschleuniger (F2) eingesetzt.

**Verbindung (G)**

Beispiele für gegebenenfalls eingesetztes Lösungsmittel (G) sind aliphatische ein- und mehrwertige Alkohole, wie Methanol, Ethanol, n-Propanol, Isopropanol, n-Butanol, iso-Butanol, sec-Butanol, 1,2-Ethandiol, 1,2-Propandiol, 1,3-Propandiol, Polypropylenglycol, Polyethylenglycol, 1,2-Butandiol, 1,3-Butandiol, Polybutylenglycol und Glycerin; Ether, wie Methyl-tert.-butylether, Di-tert.-butylether und Di-, Tri- oder Tetraethylenglycoldimethylether; gesättigte Kohlenwasserstoffe, wie n-Hexan, Cyclohexan, n-Heptan, n-Octan und isomere Octane, wie 2-Ethylhexan, 2,4,4-Trimethylpentan, 2,2,4-Trimethylpentan, 2-Methylheptan, Trichlorethylen, sowie Gemische gesättigter Kohlenwasserstoffe mit Siedebereichen zwischen 60-300°C, wie sie unter den Handelsnamen Exxsol™, Hydroseal® oder Shellsol® erhältlich sind; aromatische Lösungsmittel, wie Benzol, Toluol, Styrol, o-, m- oder p-Xylol, Solvent Naphta, Dimethylphthalat, Di-iso-butylphthalat, Dicyclohexylphthalat, Mesitylen und Chlorbenzol; Aldehyd-Acetale, wie Methylal, Ethylhexylal, Butylal, 1,3-Dioxolan und Glycerinformal; Carbonate, wie 1,3-Dioxolan-2-on, Diethylcarbonat, Dimethylcarbonat, Dipropylcarbonat, Propylenglycolcarbonat, Ethylencarbonat; Ketone, wie Aceton, Methyl-iso-butylketon, Methylethylketon, Methyl-iso-amylketon, Di-iso-butylketon, Aceton und Cyclohexanon; Ester, wie Ethylacetat, n-Butylacetat, Ethylenglykoldiacetat, gamma-Butyrolacton, 2-Methoxypropylacetat (MPA), Dipropylenglycol-dibenzoat und Ethylethoxypropionat; Amide, wie N,N-Dimethylformamid, N,N-Dimethylacetamid, N-Methyl-2-pyrrolidon und N-Ethyl-2-pyrrolidon; Acetonitril; und Dimethylsulfoxid.

Bevorzugte Lösungsmittel (G) sind aromatische Kohlenwasserstoffe und Ketone.

Falls die erfindungsgemäßen Zusammensetzungen Lösungsmittel (G) enthalten, handelt es sich um Mengen von bevorzugt 10 bis 500 Gewichtsteilen, besonders bevorzugt 50 bis 300 Gewichtsteilen, jeweils bezogen auf 100 Gewichtsteile der Summe der Komponenten (A) und (B). Die erfindungsgemäßen Zusammensetzungen enthalten bevorzugt kein Lösungsmittel (G).

**Verbindung (H)**

Bei den erfindungsgemäß gegebenenfalls eingesetzten weiteren Bestandteilen (H) handelt es sich bevorzugt um Pigmente, Farbstoffe, Riechstoffe, Verarbeitungshilfsmittel, wie Mittel zur Beeinflussung der Klebrigkeit, Gleitmittel, Entformungsmittel, Antiblockmittel oder Dispergiermittel; Stabilisatoren gegen Hydrolyse, Licht, Oxidation, Hitze, Verfärbung; flammabweisend machende Mittel oder Weichmacher.

Falls die erfindungsgemäßen Zusammensetzungen weitere Bestandteile (H) enthalten, handelt es sich um Mengen von bevorzugt 0,01 bis 20 Gewichtsteilen, besonders bevorzugt 0,1 bis 10 Gewichtsteilen, jeweils bezogen auf 100 Gewichtsteile der Summe von Komponenten (A) und (B). Die erfindungsgemäßen Zusammensetzungen enthalten bevorzugt keine weiteren Bestandteile (H).

Vorzugsweise handelt es sich bei den erfindungsgemäßen Zusammensetzungen um solche, enthaltend

(A) mindestens ein Cyanatesterharz,
(B) mindestens ein Organosiloxan,
gegebenenfalls (C) mindestens einen Modifikator, gegebenenfalls (D) mindestens ein Reaktivharz,
(E) mindestens einen Füllstoff,
gegebenenfalls (F) mindestens einen Härtungsbeschleuniger,
gegebenenfalls (G) mindestens ein Lösungsmittel und gegebenenfalls (H) weitere Bestandteile.

Bevorzugt handelt es sich bei den erfindungsgemäßen Zusammensetzungen um solche, enthaltend

(A) mindestens ein Cyanatesterharz,
(B) mindestens ein Organosiloxan,
(C) mindestens einen Modifikator,
gegebenenfalls (D) mindestens ein Reaktivharz,
(E1) mindestens einen faserverstärkenden Füllstoff,
gegebenenfalls (F) mindestens einen Härtungsbeschleuniger,
gegebenenfalls (G) mindestens ein Lösungsmittel und
gegebenenfalls (H) weitere Bestandteile.

In einer besonders bevorzugten Ausführungsform handelt es sich bei den erfindungsgemäßen Zusammensetzungen um solche, enthaltend

(A) mindestens ein Cyanatesterharz,
(B) mindestens ein Organosiloxan,

gegebenenfalls (C) mindestens einen Modifikator,
(D1) mindestens ein Epoxidharz,
(E1) mindestens einen faserverstärkenden Füllstoff,
gegebenenfalls (F) mindestens einen Härtungsbeschleuniger,
gegebenenfalls (G) mindestens ein Lösungsmittel und gegebenenfalls (H) weitere Bestandteile.

Insbesondere handelt es sich bei den erfindungsgemäßen Zusammensetzungen um solche, enthaltend

(A) mindestens ein Cyanatesterharz,
(B) mindestens ein Organosiloxan,
(C) mindestens einen Modifikator,
(D1) mindestens ein Epoxidharz,
(E1) mindestens einen faserverstärkenden Füllstoff,
gegebenenfalls (F) mindestens einen Härtungsbeschleuniger,
gegebenenfalls (G) mindestens ein Lösungsmittel und gegebenenfalls (H) weitere Bestandteile.

In einer weiteren besonders bevorzugten Ausführungsform handelt es sich bei den erfindungsgemäßen Zusammensetzungen um solche, enthaltend

(A) mindestens ein Cyanatesterharz,
(B) mindestens ein Organosiloxan,
gegebenenfalls (C) mindestens einen Modifikator ausgewählt aus der Gruppe (C1) bis (C4),
(D2) mindestens ein Maleimidharz,
(E1) mindestens einen faserverstärkenden Füllstoff,
gegebenenfalls (F) mindestens einen Härtungsbeschleuniger,
gegebenenfalls (G) mindestens ein Lösungsmittel und gegebenenfalls (H) weitere Bestandteile,
mit der Maßgabe, dass mindestens eine Komponente (A), (C3) oder (C4) mit an aromatischen Kohlenstoffatomen direkt gebundenen 1-Propenyl- oder 2-Propenyl-Gruppen enthalten ist.

In einer weiteren insbesonderen Ausführungsform handelt es sich bei den erfindungsgemäßen Zusammensetzungen um solche, enthaltend

(A) mindestens ein Cyanatesterharz,
(B) mindestens ein Organosiloxan,
(C4) mindestens einen Modifikator
(C) gegebenenfalls mindestens einen weiteren Modifikator ausgewählt aus der Gruppe (C1) bis (C3),
(D2) mindestens ein Maleimidharz,
(E1) mindestens einen faserverstärkenden Füllstoff,
gegebenenfalls (F) mindestens einen Härtungsbeschleuniger,
gegebenenfalls (G) mindestens ein Lösungsmittel und gegebenenfalls (H) weitere Bestandteile.

Die erfindungsgemäßen Zusammensetzungen enthalten außer den Komponenten (A) und (B), den gegebenenfalls eingesetzten Komponenten (C) bis (H) sowie gegebenenfalls rohstofftypischen Verunreinigungen, zum Beispiel Katalysatorreste, wie Natriumchlorid oder Kaliumchlorid, Verunreinigungen in technischen Cyanatesterharz-Monomeren sowie gegebenenfalls Umsetzungsprodukte der eingesetzten Komponenten, die beim Vermischen bzw. bei der Lagerung entstehen, keine weiteren Komponenten.

In den erfindungsgemäßen Zusammensetzungen können die bisher beschriebenen Komponenten jeweils einzeln oder in Form eines Gemisches aus mindestens zwei der jeweiligen Komponenten eingesetzt werden.

Die Herstellung der erfindungsgemäßen Zusammensetzungen kann nach bekannten Verfahren erfolgen, wie beispielsweise durch Mischen der einzelnen Komponenten in beliebiger Reihenfolge und auf bisher bekannte Art und Weise.

Ein weiterer Gegenstand der vorliegenden Erfindung ist ein Verfahren zur Herstellung der erfindungsgemäßen Zusammensetzungen durch Vermischung der einzelnen Komponenten in beliebiger Reihenfolge.

Bei dem erfindungsgemäßen Verfahren kann das Vermischen bei Temperaturen im Bereich von bevorzugt 20 bis 150°C, besonders bevorzugt im Bereich von 50 bis 130°C, insbesondere bei Temperaturen von 60 bis 120°C erfolgen. Ganz besonders bevorzugt wird bei der Temperatur gemischt, die sich beim Vermischen bei Umgebungstemperatur aus der Temperatur der Rohstoffe plus der Temperaturerhöhung durch den Energieeintrag beim Mischen ergibt, wobei nach Bedarf geheizt oder gekühlt werden kann.

Das Vermischen kann beim Druck der umgebenden Atmosphäre, also etwa 900 bis 1100 hPa, erfolgen. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen oder bei Überdruck zu arbeiten, wie bei Drücken zwischen 1100 hPa und 3000 hPa Absolutdruck, insbesondere bei kontinuierlicher Arbeitsweise, wenn z.B. sich diese Drücke bei geschlossenen Systemen durch den Druck beim Pumpen und durch den Dampfdruck der eingesetzten Materialien bei erhöhten Temperaturen ergeben.

Das erfindungsgemäße Verfahren kann kontinuierlich, diskontinuierlich oder semikontinuierlich durchgeführt werden, bevorzugt wird es diskontinuierlich durchgeführt.

In einer bevorzugten Ausführungsform des erfindungsgemäßen Verfahrens zur Herstellung der Zusammensetzungen werden die einzelnen Komponenten in beliebiger Reihenfolge vermischt, wobei als Füllstoff (F) Komponente (F1) eingesetzt wird.

Die erfindungsgemäßen Zusammensetzungen können für alle Zwecke eingesetzt werden, für die auch bisher organische Reaktivharz-Systeme oder deren Prepolymere zur anschließenden Vernetzung in Duroplaste eingesetzt worden sind.

Die erfindungsgemäßen Zusammensetzungen können nach bekannten Verarbeitungstechniken zu Formkörpern verarbeitet werden, z.B. durch Prepregging (aus der Schmelze, Lösung oder Suspension), Spritzpressen, Wickelverfahren (Filament Winding), Formpressen, Pulverbeschichtung, Pultrusion, sowie Injektionsverfahren, wie Transferformung (Resin Transfer Moulding).

Bei einer Variante des erfindungsgemäßen Verfahrens werden bevorzugt zunächst die Komponenten (A) und (B) sowie die optionalen Komponenten (C), (D), (G) und (H) in beliebiger Reihenfolge zu einer Vormischung vermischt, und dann wird Komponente (E1), bevorzugt Seile, Gewebe, Gelege, Gestricke oder Geflechte, mit der Vormischung gegebenenfalls unter Druck getränkt und gegebenenfalls entgast. Bei mehrlagigen Geweben oder Gelegen (E1) kann jede Schicht einzeln oder alle Schichten gemeinsam getränkt und entgast werden.

Bei einer weiteren bevorzugten Variante des erfindungsgemäßen Verfahrens werden zunächst die Komponenten (A) und (B) sowie die optionalen Komponenten (C), (D), (G) und (H) in beliebiger Reihenfolge zu einer Vormischung vermischt, und dann in ein Formnest, in welchem sich die Komponente (E1), bevorzugt Seile, Gewebe, Gelege, Gestricke oder Geflechte, befindet, injiziert, wobei bevorzugt während des Einspritzvorgangs gleichzeitig entgast wird.

Bei einer weiteren bevorzugten Variante des erfindungsgemäßen Verfahrens werden zunächst die Komponenten (A) und (B) sowie die optionalen Komponenten (C), (D), (G), und (H) in beliebiger Reihenfolge zu einer Vormischung vermischt, und dann auf ein Trennpapier aufgebracht; anschließend wird Komponente (E1), bevorzugt ausgerichtete Seile, Gewebe, Gelege, Gestricke oder Geflechte, zwischen zwei beschichteten Papierblättern verpresst und durch eine Reihe von geheizten Walzen geführt, um eine vollständige Benetzung der Komponente (E1) zu bewirken.

Die erfindungsgemäßen Zusammensetzungen können durch mechanischen Druck bei Temperatur der Umgebung oder gegebenenfalls bei erhöhter Temperatur in beliebige Form gebracht werden.

Die erfindungsgemäßen Zusammensetzungen sind bevorzugt formbar und werden besonders bevorzugt in einem Formnest bzw. um eine Formkörper-Schablone modelliert und ausgehärtet.

Ein weiterer Gegenstand der Erfindung ist daher die Verwendung der erfindungsgemäßen Zusammensetzung zur Herstellung von Formkörpern.

Ein weiterer Gegenstand der Erfindung ist daher ein Verfahren zur Herstellung von Formkörpern durch Formung der Zusammensetzung und Aushärten.

Ein weiterer Gegenstand der Erfindung sind daher Formkörper erhältlich aus den erfindungsgemäßen Zusammensetzungen durch Formgebung und Aushärtung.

Die erfindungsgemäßen bzw. erfindungsgemäß hergestellten Zusammensetzungen vernetzen durch Cyclotrimerisierung der Cyanatester-Gruppen aus (A), gegebenenfalls (C1) und gegebenenfalls (C3) zu 1,3,5-Triazineinheiten, gegebenenfalls in Gegenwart eines Beschleunigers (F1); sowie gegebenenfalls zusätzlich durch Cyclotri- und Cyclotetramerisierung von Kohlenstoff-Kohlenstoff-Dreifachbindungen, Additionsreaktion, Alder-En-Reaktion, Diels-Alder-Cycloaddition und Polymerisation, wobei außerdem intramolekulare Umlagerungen, Isomerisierungen und Rearomatisierungschritte stattfinden können. Falls die erfindungsgemäße Aushärtung zusätzlich auch durch Additionsreaktion und ggf. Umlagerung erfolgt, reagieren bevorzugt die gegebenenfalls anwesenden Epoxidgruppen aus (C1) und (D1) und der zu Triazineinheiten cyclisierten Cyanatester-Gruppen aus (A) miteinander und/oder es reagieren bevorzugt die gegebenenfalls anwesenden Hydroxy-Gruppen aus (C1), (C2), (C4) und "Koppler"-Komponenten, welche pro Molekül eine oder mehrere an aromatische Kohlenstoffatome gebundene Hydroxy-Gruppen sowie eine an ein aromatisches Kohlenstoffatom gebundene Imido-Gruppe, aufweisen, wie zum Beispiel N-(4-Hydroxyphenyl)maleimid, mit den Cyanatester-Gruppen aus (A).

Falls die erfindungsgemäße Aushärtung zusätzlich auch durch Cyclotri- und Cyclotetramerisierung von Kohlenstoff-Kohlenstoff-Dreifachbindungen erfolgt, reagieren bevorzugt die gegebenenfalls anwesenden reaktiven Kohlenstoff-Kohlenstoff-Dreifachbindungen von Imid (D2) und/oder Modifikator (C1) miteinander. Falls die erfindungsgemäße Aushärtung zusätzlich auch durch Polymerisation erfolgt, reagieren bevorzugt die gegebenenfalls anwesenden reaktiven Nadimido- oder Maleimido-Gruppen oder die Kohlenstoff-Kohlenstoff-Dreifachbindungen von Imidharz (D2) und/oder Modifikator (C1) miteinander, wobei sich an die Polymerisation gegebenenfalls Umlagerungen und gegebenenfalls Cycloadditions-Reaktionen anschließen können. Falls die erfindungsgemäße Aushärtung zusätzlich auch durch Alder-En- oder Diels-Alder-Reaktion erfolgt, reagieren bevorzugt die gegebenenfalls anwesenden reaktiven Gruppen von Imidharz (D2), besonders bevorzugt Maleimidharz (D2), und der gegebenenfalls anwesenden 1-Propenyl- und 2-Propenylgruppen aus (A), (C1), (C3) und/oder (C4) miteinander, wobei sich besonders bevorzugt weitere Diels-Alder-Reaktionen und Rearomatisierungschritte anschließen.

Die erfindungsgemäßen bzw. erfindungsgemäß hergestellten Mischungen werden bevorzugt vor dem Aushärten entgast, besonders bevorzugt nach der Formgebung und vor dem Aushärten.

Die erfindungsgemäße Vernetzung erfolgt bevorzugt bei Temperaturen im Bereich von 50 bis 350°C, besonders bevorzugt von 100 bis 300°C, insbesondere von 120 bis 270°C. Ganz besonders bevorzugt erfolgt die erfindungsgemäße Vernetzung stufenweise bei Temperaturen von 120 bis 270°C.

Durch Erhöhung der Temperatur kann die Vernetzung beschleunigt werden, so dass die Formgebung und die Vernetzung auch in einem gemeinsamen Schritt durchgeführt werden können.

Bei den erfindungsgemäßen Formkörpern handelt es sich bevorzugt um Faserverbundwerkstoffe (bzw. faserverstärkte Kunststoffe "FVK") .

Ein weiterer Gegenstand der Erfindung ist ein Verfahren zur Herstellung von Faserverbundwerkstoffen, dadurch gekennzeichnet, dass die erfindungsgemäßen Zusammensetzungen geformt und vernetzt werden.

Die erfindungsgemäßen Zusammensetzungen aus (A) und (B) härten bevorzugt zu makroskopisch homogen-einphasigen, transparenten Duromeren aus.

Die erfindungsgemäßen Zusammensetzungen können bei einer Temperatur von 100°C und einem Luftdruck von 1013 hPa fest oder flüssig sein, wobei sie bei 100°C und 1013 hPa bevorzugt flüssig sind.

Falls die erfindungsgemäßen Zusammensetzungen bei 100°C und 1013 hPa flüssig sind, haben sie eine dynamische Viskosität von vorzugsweise mehr als 1 und weniger als 5 000 mPa·s, bevorzugt mehr als 1 und weniger als 2 000 mPa·s, besonders bevorzugt mehr als 1 und weniger als 1 000 mPa·s, insbesondere mehr als 1 und weniger als 500 mPa·s, jeweils bei 100°C und 1013 hPa.

Im Rahmen der vorliegenden Erfindung wird die dynamische Viskosität nach DIN 53019 bei einer Temperatur, sofern nicht anders angegeben, von 23°C und einem Luftdruck von 1013 hPa bestimmt. Die Messung wird mit einem Rotationsrheometer "Physica MCR 300" von der Firma Anton Paar durchgeführt. Dabei wird für Viskositäten von 1 bis 200 mPa·s ein koaxiales Zylinder-Messsystem (CC 27) mit einem Ring-Messspalt von 1,13 mm genutzt, für Viskositäten von größer als 200 mPa·s ein Kegel-Platte-Messsystem (Searle-System mit Messkegel CP 50-1) verwendet. Die Schergeschwindigkeit wird der Polymerviskosität angepasst (1 bis 99 mPa·s bei 100 s-1; 100 bis 999 mPa·s bei 200 s-1; 1000 bis 2999 mPa·s bei 120 s-1; 3000 bis 4999 mPa·s bei 80 s-1; 5000 bis 9999 mPa·s bei 62 s-1; 10000 bis 12499 mPa·s bei 50 s-1; 12500 bis 15999 mPa·s bei 38,5 s-1; 16000 bis 19999 mPa·s bei 33 s-1; 20000 bis 24999 mPa·s bei 25 s-1; 25000 bis 29999 mPa·s bei 20 s-1; 30000 bis 39999 mPa·s bei 17 s-1; 40000 bis 59999 mPa·s bei 10 s-1; 60000 bis 149999 bei 5 s-1; 150000 bis 199999 mPa·s bei 3,3 s-1; 200000 bis 299999 mPa·s bei 2,5 s-1; 300000 bis 1000000 mPa·s bei 1,5 s-1.

Nach Temperierung des Messsystems auf die Messtemperatur wird ein dreistufiges Messprogramm bestehend aus einer Einlaufphase, einer Vorscherung und einer Viskositäts-Messung angewandt. Die Einlaufphase erfolgt durch stufenweise Erhöhung der Schergeschwindigkeit innerhalb einer Minute auf die oben angegebene von der zu erwartenden Viskosität abhängigen Schergeschwindigkeit, bei der die Messung erfolgen soll. Sobald diese erreicht ist, erfolgt bei konstanter Schergeschwindigkeit die Vorscherung für 30 s, anschließend werden zur Bestimmung der Viskosität 25 Einzelmessungen für je 4,8 s durchgeführt, aus denen der Mittelwert bestimmt wird. Der Mittelwert entspricht der dynamischen Viskosität, die in mPa·s angegeben wird.

Die erfindungsgemäßen ausgehärteten duromeren Zusammensetzungen aus 85 Gewichtsteilen (A) und 15 Gewichtsteilen (B) weisen nach 200 Stunden Lagerung bei 240°C einen Gewichtsverlust auf, der vorzugsweise maximal 100%, bevorzugt maximal 90%, besonders bevorzugt maximal 80%, insbesondere maximal 70%, höher ist im Vergleich zu den entsprechenden unmodifizierten Cyanatesterharzen (A).

Die erfindungsgemäßen ausgehärteten duromeren Zusammensetzungen aus 85 Gewichtsteilen (A) und 15 Gewichtsteilen (B) weisen nach 2000 Stunden Wasserlagerung bei 70°C eine um vorzugsweise mindestens 20%, bevorzugt mindestens 30%, besonders bevorzugt mindestens 40%, insbesondere mindestens 50%, verringerte Wasseraufnahme auf im Vergleich zu den entsprechenden unmodifizierten Cyanatesterharzen (A).

Bevorzugt beträgt der Quotient des Biege-Elastizitätsmoduls E von den ausgehärteten, erfindungsgemäßen Zusammensetzungen aus (A) und (B), zu dem jeweiligen ausgehärteten, nicht modifizierten Cyanatesterharz (A), 0,5 bis 1,0, besonders bevorzugt 0,5 bis 0,95, insbesondere 0,6 bis 0,85, jeweils gemessen bei 23°C.

Bevorzugt ist der Quotient des kritischen Spannungsintensitätsfaktors $K_{Ic}$ von den ausgehärteten, erfindungsgemäßen Zusammensetzungen aus (A) und (B), zu dem jeweiligen ausgehärteten, nicht modifizierten Cyanatesterharz (A), größer 1,0, besonders bevorzugt größer 1,1, insbesondere größer 1,2, jeweils gemessen bei 23°C.

Die erfindungsgemäßen ausgehärteten Zusammensetzungen haben den Vorteil, dass sie eine deutlich verringerte Wasseraufnahme und damit eine bessere Hydrolysebeständigkeit aufweisen.

Die erfindungsgemäßen Formkörper haben den Vorteil, dass sie hitzestabil sind und eine verringerte Brandlast im Vergleich zu Verbundmaterialien aus rein organischen Cyanatester-Harzsystemen haben.

Die erfindungsgemäßen Formkörper haben den Vorteil, dass sie eine hohe thermische Stabilität aufweisen.

Die erfindungsgemäßen Zusammensetzungen haben den Vorteil, dass sich sogenannte Composite herstellen lassen, welche hochtemperaturbeständig sind, eine hohe Glasübergangstemperatur, eine hohe Steifigkeit und eine hohe Risszähigkeit, ausgedrückt durch den kritischen Spannungsintensitätsfaktor ($K_{Ic}$), aufweisen.

Die erfindungsgemäßen Zusammensetzungen haben den Vorteil, dass sie aus leicht zugänglichen Rohstoffen und auf einfache Art und Weise hergestellt werden können.

Die erfindungsgemäßen Zusammensetzungen haben den Vorteil, dass bei der Verarbeitung keine gesundheitsschädlichen Emissionen in dem Umfang entstehen wie sie üblicherweise bei nach dem Stand der Technik eingesetzten organischen Cyanatester-Harzen auftreten.

**Ausführungsbeispiele**

Die nachfolgenden Beispiele beschreiben die prinzipielle Ausführbarkeit der vorliegenden Erfindung, ohne jedoch diese auf die darin offenbarten Inhalte zu beschränken.

Die nachfolgenden Beispiele wurden bei einem Druck der umgebenden Atmosphäre, also bei etwa 1013 hPa, und bei Raumtemperatur, also etwa 23°C bzw. einer Temperatur, die sich beim Zusammengeben der Reaktanden bei Raumtemperatur ohne zusätzliche Heizung oder Kühlung einstellt, durchgeführt.

**Molmassen**

Im Rahmen der vorliegenden Erfindung werden die Gewichtsmittel-Molmasse Mw und die die Zahlenmittel-Molmasse Mn, jeweils in der Einheit g/mol, gerundet auf ganze 10er Zahlen entsprechend DIN 1333:1992-02 Abschnitt 4, mit Größenausschlusschromatographie (SEC/GPC) entsprechend DIN 55672-1/ISO 160414-1 sowie ISO 160414-3 mit Tetrahydrofuran (THF) als Eluent bestimmt, indem ein Säulensatz basierend auf Polystyrol-co-Divinylbenzol als stationärer Phase aus drei Säulen unterschiedlicher Porengrößenverteilung der Reihenfolge nach 10000 Å, 500 Å und 100 Å mit einer Ausschlussgröße von größer als 450,000 g/mol gegen Polystyrol-Standards kalibriert wird. Die Analysen werden bei einer Säulentemperatur von $40\pm1°C$ und mittels Brechungsindex-Detektor durchgeführt.

**Herstellung der Prüfkörper**

Zunächst wurde das Cyanatesterharz (A) unter Durchmischung auf 100°C erwärmt zur besseren Verarbeitbarkeit. Dann wurde Organosiloxan (B) zugegeben, die Mischung wurde eine Stunde bei 120°C homogenisiert, anschließend eine Stunde bei 120°C und einem Druck von 10 mbar entgast und nach dem Brechen des Vakuums mit Stickstoff sofort in eine auf 160°C vorgewärmte 2-teilige verschraubbare Gussform aus Aluminium heiß eingefüllt; die Formnest-Dimensionen betrugen dabei 100 mm × 12,7 mm × 2,5 mm (Länge × Breite × Höhe) zur Herstellung der Prüfkörper für den Biegezugversuch und 200 mm × 100 mm × 6,5 mm (Länge × Breite × Höhe) zur Herstellung der Prüfkörper zur Bestimmung der Risszähigkeit, der Wasseraufnahme und der thermo-oxidativen Stabilität. Um ein Anhaften und Auslaufen zu vermeiden wurde die Formnest-Oberfläche auf den Innenseiten der Gussform mit einem Polytetrafluorethylen-Spray behandelt und um das Formnest herum eine 2 mm dicke Rundschnur aus Fluorkautschuk mit einer Härte von 75 Shore A gelegt. Zur Härtung wurden die befüllten

Formen in einem Umluftofen entsprechend dem folgendem Temperaturprogramm gelagert:

1) 18 Stunden Härtung bei 180°C
2) Temperaturerhöhung innert 30 Minuten auf 200°C
3) 3 Stunden Härtung bei 200°C
4) Temperaturerhöhung innert 30 Minuten auf 240°C
5) 2 Stunden Härtung bei 240°C.

Anschließend ließ man die Probekörper in den Formen auf Umgebungstemperatur abkühlen bevor diese entformt wurden. Für die weitere Verwendung wurden die oberen 10 mm der Vulkanisat-Seite, die während der Aushärtung in der Gussform offen und luftzugewandt war, abgetrennt und verworfen. Dann wurden die Prüfkörper zur Messung der Risszähigkeit, der Wasseraufnahme und der thermo-oxidativen Stabilität mit einer Diamant-Trennsäge aus der großen Vulkanisat-Platte mit der Höhe 6,5 mm in den entsprechenden Dimensionen Länge x Breite herausgetrennt, sodass alle vier Prüfkörper-Seitenflächen der Höhe 6,5 mm gesägt waren; die 1,00 mm dicken Prüfkörper zur Messung der Wasseraufnahme wurden aus dem vorgesägten Stück mit einer Innenloch-Diamantsäge aus dem inneren Teil herausgeschnitten, sodass bei diesen Prüfkörpern alle sechs Flächen gesägt waren.

**Risszähigkeit K$_{Ic}$**

Die Messung der Risszähigkeit bzw. des kritischen Spannungsintensitätsfaktors K$_{Ic}$ wurde wie in der Veröffentlichung "Reactive and Functional Polymers 142(2019)159-182" beschrieben bei 23°C und 50% relative Feuchte durchgeführt; die Dicke der Probenkörper betrug dabei 6,5 mm. Der in Tabelle 1 angegebene Wert für die Risszähigkeit K$_{Ic}$ in MN $\times$ m$^{-3/2}$ wurde auf zwei Nachkommastellen gerundet entsprechend DIN 1333:1992-02 Abschnitt 4.

**Biege-Elastizitätsmodul E**

In der vorliegenden Erfindung wurde der Biege-Elastizitätsmodul nach ISO 178:2011-04 Verfahren A mit einer Prüfgeschwindigkeit von 2 mm/min bei einer Auflagedistanz L von 38 mm gemessen. Die Messungen wurden bei 23°C und 50% relative Feuchte durchgeführt. Es wurden quaderförmige Prüfkörper in den Dimensionen Länge x Breite x Dicke = 60,0 mm $\times$ 12,7 mm $\times$ 2,5 mm verwendet. Die Messungen wurden an jeweils 5 Prüfkörpern durchgeführt. Der in Tabelle 1 angegebene Wert für den Biege-Elastizitätsmodul E in GPa entspricht dem jeweiligen Mittelwert der Einzelmessungen, gerundet auf eine Nachkommastelle entsprechend DIN 1333:1992-02 Abschnitt 4.

**Wasseraufnahme**

In der vorliegenden Erfindung wurden für die gravimetrische Wasseraufnahme quaderförmige Prüfkörper in den Dimensionen Länge x Breite x Dicke = 30,00 mm $\times$ 17,00 mm $\times$ 1,00 mm verwendet; die Genauigkeit der Gewichtsbestimmung betrug +0,01 mg. Die Prüfkörper wurden zunächst in einem Vakuumofen bei 70°C und 30 mbar bis zur Gewichtskonstanz getrocknet, wobei das Gewicht in Intervallen von 24 Stunden bestimmt wurde. Die Prüfkörper galten als "trocken" wenn über einen Zeitraum von 48 Stunden kein weiterer Gewichtsverlust gemessen wurde. Jeweils ein trockener Prüfkörper wurde anschließend in einem geeigneten verschließbaren Gefäß in 45 ml deionisiertes Wasser eingetaucht; das verschlossene Gefäß wurde dann in einen auf 70°C vorgeheizten Umluftofen gestellt und bei dieser Temperatur während des gesamten Prüfzeitraums temperiert. Nach 2000 Stunden wurden die Prüfkörper entnommen, auf Umgebungstemperatur abgekühlt und die Oberflächen mit einem Tuch trocken gewischt; anschließend wurde das Gewicht der Prüfkörper erneut bestimmt. Die Wasseraufnahme wurde berechnet nach

$$\left( \frac{\text{Gewicht nach Wasserlagerung in g}}{\text{Gewicht nach Trocknung und vor Wasserlagerung in g}} - 1 \right)$$ ; in Tabelle 1 wurde der Wert für die Wasseraufnahme in % angegeben und auf zwei Nachkommastellen gerundet entsprechend DIN 1333:1992-02 Abschnitt 4.

**Thermo-oxidative Stabilität**

In der vorliegenden Erfindung wurden für die gravimetrische Ermittlung der thermo-oxidativen Stabilität quaderförmige Prüfkörper in den Dimensionen Länge x Breite x Dicke = 12,00 mm $\times$ 6,50 mm $\times$ 6,50 mm verwendet; die Genauigkeit der Gewichtsbestimmung betrug +0,1 mg. Die Prüfkörper wurden zunächst in einem Vakuumofen bei 70°C und 30 mbar bis zur Gewichtskonstanz getrocknet, wobei das Gewicht in Intervallen von 24 Stunden bestimmt wurde. Die Prüfkörper galten als "trocken" wenn über einen Zeitraum von 48 Stunden kein weiterer Gewichtsverlust gemessen wurde. Anschließend wurden die Prüfkörper in einem Umluftofen bei 240°C gelagert. Nach 200 Stunden wurden die Prüfkörper entnommen und das Gewicht der Prüfkörper erneut bestimmt. Die Gewichtsabnahme wurde berechnet nach

$$\left( \frac{\text{Gewicht nach 240°C-Lagerung in g}}{\text{Gewicht nach Trocknung und vor 240°C-Lagerung in g}} - 1 \right)$$ ; in Tabelle 1 wurde der Wert für die Gewichtsabnahme in % angegeben und auf zwei Nachkommastellen gerundet entsprechend DIN 1333:1992-02 Abschnitt 4.

**Kompatibilität**

Die Verträglichkeit der ausgehärteten Cyanatestermatrix mit dem Siloxan-Modifikator wurde anhand der hergestellten Prüfkörper direkt nach der Aushärtung beurteilt. In Tabelle 1 ist die Kompatibilität angegeben als "+" = gute Kompatibilität (Prüfkörper homogen einphasig, transparent, kein Ausölen bzw. Ausschwitzen der Siloxankomponente aus dem Vulkanisat), "o" = mittlere Kompatibilität (Prüfkörper trüb bis opak, Oberflächen trocken, kein Ausölen bzw. Ausschwitzen der Siloxankomponente aus dem Vulkanisat) und "-" = schlechte Kompatibilität (Prüfkörper opak, Oberflächen ölig oder klebrig, sichtbares Ausölen bzw. Ausschwitzen der Siloxankomponente aus dem Vulkanisat).

**Beispiel B1**

85 g 2,2-Bis(4-cyanatophenyl)propan (CAS 1156-51-0; käuflich erhältlich bei TCI Deutschland GmbH, D-65760 Eschborn) als Komponente (A) wurden mit 15 g 1,1,3,5,5-Pentaphenyl-1,3,5-trimethyltrisiloxan (CAS 3390-61-2; käuflich erhältlich bei aber GmbH, D-76187 Karlsruhe) als Komponente (B) wie unter "Herstellung der Prüfkörper" beschrieben vermischt, in Gussformen abgefüllt und ausgehärtet.

**Vergleichsbeispiel V1**

Die in Beispiel 1 beschriebene Verfahrensweise wurde wiederholt mit der Abänderung, dass kein 1,1,3,5,5-Pentaphenyl-1,3,5-trimethyltrisiloxan als Komponente (B) zur Komponente (A) hinzugefügt wurde.

**Vergleichsbeispiel V2**

Die in Beispiel 1 beschriebene Verfahrensweise wurde wiederholt mit der Abänderung, dass anstelle von 1,1,3,5,5-Pentaphenyl-1,3,5-trimethyltrisiloxan  1,1,5,5-Tetramethyl-3,3-diphenyltrisiloxan (CAS 17875-55-7; käuflich erhältlich bei TCI Deutschland GmbH, D-65760 Eschborn) zur Komponente (A) hinzugefügt wurde.

**Vergleichsbeispiel V3**

Die in Beispiel 1 beschriebene Verfahrensweise wurde wiederholt mit der Abänderung, dass anstelle von 1,1,3,5,5-Pentaphenyl-1,3,5-trimethyltrisiloxan ein Poly(methylphenylsiloxan) mit einer mittleren Zusammensetzung $(Me_3SiO_{1/2})_{0,12}(MePhSiO_{2/2})_{0,88}$, einer gewichtsmittleren Molmasse Mw von 2150 g/mol und einer zahlenmittleren Molmasse Mn von 1380 g/mol (CAS 9005-12-3; käuflich erhältlich bei ABCR, 76187 Karlsruhe) zur Komponente (A) hinzugefügt wurde.

**Vergleichsbeispiel V4**

Die in Beispiel 1 beschriebene Verfahrensweise wurde wiederholt mit der Abänderung, dass anstelle von 1,1,3,5,5-Pentaphenyl-1,3,5-trimethyltrisiloxan ein Poly(methylphenylsiloxan) mit einer mittleren Zusammensetzung $(Me_3SiO_{1/2})_{0,30}(MePhSiO_{2/2})_{0,70}$, einer gewichtsmittleren Molmasse Mw von 800 g/mol und einer zahlenmittleren Molmasse Mn von 700 g/mol zur Komponente (A) hinzugefügt wurde.

**Vergleichsbeispiel V5**

Die in Beispiel 1 beschriebene Verfahrensweise wurde wiederholt mit der Abänderung, dass anstelle von 1,1,3,5,5-Pentaphenyl-1,3,5-trimethyltrisiloxan ein mit Hydroxy-Gruppen terminiertes Poly(dimethylsiloxan)diphenylsiloxan-Copolymer mit einer mittleren Zusammensetzung $(Me_2SiO_{2/2})_{0,80}(Ph_2SiO_{2/2})_{0,09}(Me_2Si(OH)O_{1/2})_{0,03}(Ph_2Si(OH)O_{1/2})_{0,08}$, einer gewichtsmittleren Molmasse Mw von 1930 g/mol und einer zahlenmittleren Molmasse Mn von 940 g/mol zur Komponente (A) hinzugefügt wurde.

Tabelle 1

| Beispiel | B1 | V1 | V2 | V3 | V4 | V5 |
|---|---|---|---|---|---|---|
| Kompatibilität | + | + | + | - | - | - |
| Biege-Elastizitätsmodul E bei 23°C [GPa] | 2,4 | 2,9 | 2, 4 | *1 | *2 | *3 |
| Spannungsintensitätsfaktor $K_{Ic}$ bei 23°C [MN $\times$ m$^{-3/2}$] | 0, 61 | 0,51 | 0,45 | *1 | *2 | *3 |
| Wasseraufnahme bei 70°C nach 2000 Stunden [%] | 1,35 | 3,13 | 2,30 | *1 | *2 | *3 |
| Thermo-oxidative Stabilität, Gewichtsabnahme bei 240°C nach 200 Stunden [%] | 1,91 | 1,30 | 2,23 | *1 | *2 | *3 |
| *1 keine Messung, da schlechte Kompatibilität (starkes Ausschwitzen). *2 keine Messung, da schlechte Kompatibilität (Ausschwitzen und klebrige Vulkanisat-Oberfläche). *3 keine Messung, da schlechte Kompatibilität (Ausschwitzen und zahlreiche oberflächliche Vertiefungen sowie Gasblasen-Einschlüsse im Vulkanisat). | | | | | | |

**Patentansprüche**

1. Vernetzbare Zusammensetzung enthaltend

   (A) mindestens eine organische, von Siloxaneinheiten (= "≡Si-O-Si≡") freie, Verbindung mit mindestens zwei reaktiven Cyanatester-Gruppen (= "N≡C-O-"),
   (B) mindestens ein lineares Organosiloxan der allgemeinen Formel

   $$R_aR^1_bSiO_{(4-a-b)/2} \qquad (I),$$

   wobei

   R gleich oder verschieden sein kann und einwertige, SiCgebundene, gesättigte aliphatische Kohlenwasserstoffreste bedeutet,
   $R^1$ gleich oder verschieden sein kann und einwertige, SiCgebundene, gegebenenfalls mit Halogen- oder Phosphoratom substituierte, aromatische Kohlenwasserstoffreste bedeutet,
   a 0, 1, 2 oder 3, bevorzugt 0, 1 oder 2, besonders bevorzugt 0 oder 1, insbesondere 1 ist,
   b 0, 1, 2 oder 3, bevorzugt 0, 1 oder 2, besonders bevorzugt 1 oder 2, ist,
   mit der Maßgabe, dass
   das Organosiloxan (B) aus drei bis fünf Einheiten der Formel (I), bevorzugt aus drei oder vier Einheiten der Formel (I), besonders bevorzugt aus drei Einheiten der Formel (I), besteht,
   in Formel (I) die Summe a+b gleich 2 oder 3 ist,
   pro Organosiloxan-Molekül (B) in zwei Einheiten der Formel (I) die Summe a+b gleich 3 ist
   und pro Organosiloxan-Molekül (B) mindestens drei Reste $R^1$ vorhanden sind.

2. Vernetzbare Zusammensetzung gemäß Anspruch 1, dadurch gekennzeichent, dass dass sie zusätzlich (E) mindestens einen Füllstoff enthält.

3. Vernetzbare Zusammensetzung gemäß Anspruch 1, dadurch gekennzeichent, dass sie zusätzlich

   (C) mindestens einen Modifikator, und
   (E1) mindestens einen faserverstärkenden Füllstoff enthält.

4. Vernetzbare Zusammensetzung gemäß Anspruch 1, dadurch gekennzeichent, dass sie zusätzlich

   (D1) mindestens ein Epoxidharz, und
   (E1) mindestens einen faserverstärkenden Füllstoff enthält.

5. Vernetzbare Zusammensetzung gemäß Anspruch 1, dadruch gekennzeichent, dass sie zusätzlich

   (C) mindestens einen Modifikator, und
   (D1) mindestens ein Epoxidharz, und
   (E1) mindestens einen faserverstärkenden Füllstoff enthält.

6. Vernetzbare Zusammensetzung gemäß Anspruch 1, dadurch gekennzeichent, dass sie zusätzlich

   gegebenenfalls (C) einen Modifikator ausgewählt aus der Gruppe (C1) bis (C4),
   (D2) mindestens ein Maleimidharz,
   (E1) mindestens einen faserverstärkenden Füllstoff enthält,
   mit der Maßgabe, dass mindestens eine Komponente (A), (C3) oder (C4) mit an aromatischen Kohlenstoffatomen direkt gebundenen 1-Propenyl- oder 2-Propenyl-Gruppen enthalten ist.

7. Vernetzbare Zusammensetzung gemäß Anspruch 1, dadurch gekennzeichent, dass sie zusätzlich

   (C4) mindestens einen Modifikator,
   (D2) mindestens ein Maleimidharz,
   (E1) mindestens einen faserverstärkenden Füllstoff enthält.

8. Verfahren zur Herstellung der vernetzbaren Zusammensetzungen, gemäß einem der Ansprüche 1 bis 7, durch Vermischung der einzelnen Komponenten in beliebiger Reihenfolge.

9. Verfahren zur Herstellung von Formkörpern, durch Formung der vernetzbaren Zusammensetzung, gemäß einem der Ansprüche 1 bis 7, und anschließendem Aushärten.

10. Verwendung der vernetzbaren Zusammensetzungen, gemäß einem der Ansprüche 1 bis 7, zur Herstellung von Formkörpern.

11. Formkörper erhältlich aus dem Verfahren gemäß Anspruch 9.

**Claims**

1. Crosslinkable composition comprising

   (A) at least one organic compound free of siloxane units (= "≡Si-O-Si≡") and having at least two reactive cyanate ester groups (= "N≡CO-"),
   (B) at least one linear organosiloxane of general formula

   $$R_aR^1{}_bSiO_{(4-a-b)/2} \qquad (I),$$

   where

   R may be identical or different and represents monovalent, SiC-bonded, saturated aliphatic hydrocarbon radicals,
   $R^1$ may be identical or different and represents monovalent, SiC-bonded, optionally halogen- or phosphorus-substituted, aromatic hydrocarbon radicals, a is 0, 1, 2 or 3, preferably 0, 1 or 2, more preferably 0 or 1, especially 1,
   b is 0, 1, 2 or 3, preferably 0, 1 or 2, more preferably 1 or 2,
   with the proviso that
   the organosiloxane (B) consists of three to five units of formula (I), preferably of three or four units of formula (I), more preferably of three units of formula (I),
   in formula (I) the sum a+b is equal to 2 or 3,
   in each molecule of organosiloxane (B) the sum a+b is in two units of formula (I) equal to 3 and in each molecule of organosiloxane (B) there are at least three radicals $R^1$ present.

2. Crosslinkable composition according to Claim 1, **characterized in that** it additionally comprises (E) at least one filler.

3. Crosslinkable composition according to Claim 1, **characterized in that** it additionally comprises

   (C) at least one modifier and
   (E1) at least one fiber-reinforcing filler.

4. Crosslinkable composition according to Claim 1, **characterized in that** it additionally comprises

   (D1) at least one epoxy resin and
   (E1) at least one fiber-reinforcing filler.

5. Crosslinkable composition according to Claim 1, **characterized in that** it additionally comprises

   (C) at least one modifier and
   (D1) at least one epoxy resin and
   (E1) at least one fiber-reinforcing filler.

6. Crosslinkable composition according to Claim 1, **characterized in that** it additionally comprises

   optionally (C) a modifier selected from the group (C1) to (C4),

(D2) at least one maleimide resin,
(E1) at least one fiber-reinforcing filler,
with the proviso that at least one component (A), (C3) or (C4) having 1-propenyl or 2-propenyl groups directly attached to aromatic carbon atoms is present.

7. Crosslinkable composition according to Claim 1, **characterized in that** it additionally comprises

(C4) at least one modifier,
(D2) at least one maleimide resin,
(E1) at least one fiber-reinforcing filler.

8. Process for producing the crosslinkable compositions according to any of Claims 1 to 7 by mixing the individual components in any desired order.

9. Process for producing shaped articles by shaping the crosslinkable composition according to any of Claims 1 to 7 and subsequent curing.

10. Use of the crosslinkable compositions according to any of Claims 1 to 7 for producing shaped articles.

11. Shaped article obtainable from the process according to Claim 9.

**Revendications**

1. Composition réticulable contenant

(A) au moins un composé organique exempt de motifs siloxane (= « ≡Si-O-Si≡ ») ayant au moins deux groupes ester cyanate réactifs (= « N≡C-O- »),
(B) au moins un organosiloxane linéaire de formule générale

$$R_a R^1_b SiO_{(4-a-b)/2} \qquad (I),$$

dans laquelle

R peut être identique ou différent et représente des radicaux hydrocarbonés aliphatiques saturés monovalents liés à Sic,
$R^1$ peut être identique ou différent et représente des radicaux hydrocarbonés aromatiques monovalents, liés à SiC, éventuellement substitués par un atome d'halogène ou de phosphore,
a représente 0, 1, 2 ou 3, de préférence 0, 1 ou 2, d'une manière particulièrement préférée 0 ou 1, en particulier 1,
b représente 0, 1, 2 ou 3, de préférence 0, 1 ou 2, d'une manière particulièrement préférée 1 ou 2,
à la condition que
l'organosiloxane (B) soit constitué de trois à cinq motifs de formule (I), de préférence de trois ou quatre motifs de formule (I), d'une manière particulièrement préférée de trois motifs de formule (I),
dans la formule (I), que la somme a + b soit égale à 2 ou 3,
que la somme a + b soit égale à 3 par molécule d'organosiloxane (B) dans deux motifs de formule (I),
et qu'au moins trois radicaux $R^1$ soient présents par molécule d'organosiloxane (B).

2. Composition réticulable selon la revendication 1, **caractérisée en ce qu'**elle contient en outre (E) au moins une charge.

3. Composition réticulable selon la revendication 1, **caractérisée en ce qu'**elle contient en outre

(C) au moins un modifiant et
(E1) au moins une charge de renforcement par des fibres.

4. Composition réticulable selon la revendication 1, **caractérisée en ce qu'**elle contient en outre

(D1) au moins une résine époxyde, et
(E1) au moins une charge de renforcement par des fibres.

5. Composition réticulable selon la revendication 1, **caractérisée en ce qu'**elle contient en outre (C) au moins un modifiant, et

(D1) au moins une résine époxyde, et
(E1) au moins une charge de renforcement par des fibres.

6. Composition réticulable selon la revendication 1, **caractérisée en ce qu'**elle contient en outre

éventuellement (C) un modifiant choisi dans le groupe (C1) à (C4),
(D2) au moins une résine de maléimide,
(E1) au moins une charge de renforcement par des fibres,
à la condition qu'elle contienne au moins un composant (A), (C3) ou (C4) ayant des groupes 1-propényle ou 2-propényle directement liés à des atomes de carbone aromatiques.

7. Composition réticulable selon la revendication 1, **caractérisée en ce qu'**elle contient en outre

(C4) au moins un modifiant,
(D2) au moins une résine de maléimide,
(E1) au moins une charge de renforcement par des fibres.

8. Procédé de fabrication des compositions réticulables selon l'une des revendications 1 à 7 par mélange dans un ordre quelconque des composants individuels.

9. Procédé de fabrication d'objets moulés par formage de la composition réticulable selon l'une des revendications 1 à 7, puis durcissement.

10. Utilisation des compositions réticulables selon l'une des revendications 1 à 7 pour fabriquer des objets moulés.

11. Objet moulé pouvant être obtenu par le procédé selon la revendication 9.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- CN 112111059
- CN 112111059 A

### In der Beschreibung aufgeführte Nicht-Patentliteratur

- *Polym. Adv. Technol.*, 2020, vol. 31, 1245-1255
- *CHEMICAL ABSTRACTS*, 1129-88-0
- *CHEMICAL ABSTRACTS*, 1129-80-2
- *CHEMICAL ABSTRACTS*, 1156-51-0
- *CHEMICAL ABSTRACTS*, 32728-27-1
- *CHEMICAL ABSTRACTS*, 47073-92-7
- *CHEMICAL ABSTRACTS*, 101657-77-6
- *CHEMICAL ABSTRACTS*, 127667-44-1
- *CHEMICAL ABSTRACTS*, 14868-03-2
- *CHEMICAL ABSTRACTS*, 1219-14-3
- *CHEMICAL ABSTRACTS*, 135507-71-0
- *CHEMICAL ABSTRACTS*, 87397-54-4
- *CHEMICAL ABSTRACTS*, 153191-90-3
- *CHEMICAL ABSTRACTS*, 268734-03-8
- *CHEMICAL ABSTRACTS*, 30944-92-4
- *CHEMICAL ABSTRACTS*, 173452-35-2
- *CHEMICAL ABSTRACTS*, 113151-22-7
- *CHEMICAL ABSTRACTS*, 25722-66-1
- *CHEMICAL ABSTRACTS*, 3390-61-2
- *CHEMICAL ABSTRACTS*, 3982-82-9
- *CHEMICAL ABSTRACTS*, 38421-40-8
- *CHEMICAL ABSTRACTS*, 6904-66-1
- *CHEMICAL ABSTRACTS*, 18758-39-9
- *CHEMICAL ABSTRACTS*, 6689-19-6
- *CHEMICAL ABSTRACTS*, 121225-98-7
- *CHEMICAL ABSTRACTS*, 18724-32-8
- *CHEMICAL ABSTRACTS*, 257284-60-9
- *CHEMICAL ABSTRACTS*, 187333-74-0
- *CHEMICAL ABSTRACTS*, 5256-79-1
- *CHEMICAL ABSTRACTS*, 546-56-5
- *CHEMICAL ABSTRACTS*, 77-63-4
- *CHEMICAL ABSTRACTS*, 1693-47-6
- *CHEMICAL ABSTRACTS*, 1122-85-6
- *CHEMICAL ABSTRACTS*, 110215-65-1
- *CHEMICAL ABSTRACTS*, 1745-89-7
- *CHEMICAL ABSTRACTS*, 97-53-0
- *CHEMICAL ABSTRACTS*, 6627-88-9
- *CHEMICAL ABSTRACTS*, 3354-58-3
- *CHEMICAL ABSTRACTS*, 1745-81-9
- *CHEMICAL ABSTRACTS*, 528-43-8
- *CHEMICAL ABSTRACTS*, 35354-74-6
- *CHEMICAL ABSTRACTS*, 110866-35-8
- *CHEMICAL ABSTRACTS*, 41481-66-7
- *CHEMICAL ABSTRACTS*, 1675-54-3
- *CHEMICAL ABSTRACTS*, 2095-03-6
- *CHEMICAL ABSTRACTS*, 2851-82-3
- *CHEMICAL ABSTRACTS*, 101-90-6
- *CHEMICAL ABSTRACTS*, 129375-41-3
- *CHEMICAL ABSTRACTS*, 85954-11-6
- *CHEMICAL ABSTRACTS*, 3072-84-2
- *CHEMICAL ABSTRACTS*, 66072-38-6
- *CHEMICAL ABSTRACTS*, 7328-97-4
- *CHEMICAL ABSTRACTS*, 878-43-1
- *CHEMICAL ABSTRACTS*, 47758-37-2
- *CHEMICAL ABSTRACTS*, 27610-48-6
- *CHEMICAL ABSTRACTS*, 29690-82-2
- *CHEMICAL ABSTRACTS*, 9003-36-5
- *CHEMICAL ABSTRACTS*, 28064-14-4
- *CHEMICAL ABSTRACTS*, 158163-01-0
- *CHEMICAL ABSTRACTS*, 28906-96-9
- *CHEMICAL ABSTRACTS*, 68610-51-5
- *CHEMICAL ABSTRACTS*, 119345-05-0
- *CHEMICAL ABSTRACTS*, 7195-45-1
- *CHEMICAL ABSTRACTS*, 7195-43-9
- *CHEMICAL ABSTRACTS*, 7237-83-4
- *CHEMICAL ABSTRACTS*, 7176-19-4
- *CHEMICAL ABSTRACTS*, 5026-74-4
- *CHEMICAL ABSTRACTS*, 28768-32-3
- *CHEMICAL ABSTRACTS*, 130728-76-6
- *CHEMICAL ABSTRACTS*, 71604-74-5
- *CHEMICAL ABSTRACTS*, 25036-25-3
- *CHEMICAL ABSTRACTS*, 40039-93-8
- *CHEMICAL ABSTRACTS*, 110839-13-9
- *CHEMICAL ABSTRACTS*, 13676-54-5
- *CHEMICAL ABSTRACTS*, 13676-53-4
- *CHEMICAL ABSTRACTS*, 39979-46-9
- *CHEMICAL ABSTRACTS*, 105391-33-1
- *CHEMICAL ABSTRACTS*, 6422-83-9
- *CHEMICAL ABSTRACTS*, 13118-04-2
- *CHEMICAL ABSTRACTS*, 3006-93-7
- *CHEMICAL ABSTRACTS*, 3278-31-7
- *CHEMICAL ABSTRACTS*, 26140-67-0
- *CHEMICAL ABSTRACTS*, 28630-26-4
- *CHEMICAL ABSTRACTS*, 67784-74-1
- *CHEMICAL ABSTRACTS*, 79922-55-7
- *CHEMICAL ABSTRACTS*, 13102-25-5
- *CHEMICAL ABSTRACTS*, 3278-30-6

- *CHEMICAL ABSTRACTS*, 7300-91-6
- *Reactive and Functional Polymers*, 2019, vol. 142, 159-182

- *CHEMICAL ABSTRACTS*, 17875-55-7
- *CHEMICAL ABSTRACTS*, 9005-12-3